(19) Europäisches Patentamt
European Patent Office
Office européen des brevets

(11) **EP 2 871 094 B1**

(12) **EUROPÄISCHE PATENTSCHRIFT**

(45) Veröffentlichungstag und Bekanntmachung des Hinweises auf die Patenterteilung:
**26.06.2019 Patentblatt 2019/26**

(51) Int Cl.:
*G01M 11/06* *(2006.01)*     *B60Q 1/00* *(2006.01)*
*B60Q 1/076* *(2006.01)*     *B60Q 1/10* *(2006.01)*
*B60Q 1/12* *(2006.01)*

(21) Anmeldenummer: **14187711.8**

(22) Anmeldetag: **06.10.2014**

(54) **Scheinwerferanordnung und Scheinwerfer eines Kraftfahrzeugs und Verfahren zur Grundeinstellung des Scheinwerfers**

Headlamp assembly and headlamp of a motor vehicle and method for adjusting the headlamp

Agencement de phare et phare pour un véhicule et procédé de réglage de base d'un phare

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.10.2013 DE 102013221926**

(43) Veröffentlichungstag der Anmeldung:
**13.05.2015 Patentblatt 2015/20**

(73) Patentinhaber: **Automotive Lighting Reutlingen GmbH**
**72762 Reutlingen (DE)**

(72) Erfinder: **Dreier, Bernd**
**72116 Mössingen (DE)**

(74) Vertreter: **DREISS Patentanwälte PartG mbB**
**Friedrichstraße 6**
**70174 Stuttgart (DE)**

(56) Entgegenhaltungen:
**EP-A2- 1 316 474          WO-A1-2009/053457**
**DE-A1- 19 720 314         DE-A1-102008 003 707**
**DE-A1-102009 047 932**

**Beschreibung**

Die vorliegende Erfindung betrifft eine Scheinwerferanordnung eines Kraftfahrzeugs gemäß dem Oberbegriff des Anspruchs 1. Ferner betrifft die Erfindung ein Verfahren zum automatischen Einstellen einer Grundeinstellung eines Lichtmoduls eines Scheinwerfers eines Kraftfahrzeugs gemäß dem Oberbegriff des Anspruchs 10.

Eine solche Scheinwerferanordnung und ein solches Verfahren ist unter Verwendung von Neigungssensoren für die erste und zweite Sensoreinheit bspw. aus der DE 10 2008 003 707 A1 bekannt. Auf herkömmliche Achssensoren zur Leuchtweiteregelung wird dabei verzichtet. Ferner sind aus der EP 1 316 474 A2 eine Scheinwerferanordnung und ein Verfahren bekannt, bei denen im Rahmen einer Leuchtweiteregelung eines Lichtmoduls Absolutwert-Sensoren verwendet werden. Die Grundeinstellung des Lichtmoduls erfolgt dabei nach wie vor auf mechanischem Wege.

Damit ein Scheinwerfer nach dem Einbau in die Kraftfahrzeugkarosserie in eine gewünschte bzw. gesetzlich vorgeschriebene Richtung strahlt, ist es aus dem Stand der Technik bekannt, zum Ausgleich von Fertigungs-, Montage- und/oder Einbautoleranzen den Scheinwerfer nach dem Einbau und zu bestimmten anderen Zeitpunkten, bspw. im Rahmen eines Werkstattaufenthalts oder im Rahmen einer Hauptuntersuchung (TÜV), in eine Grundeinstellung zu bringen. Dazu wird der Scheinwerfer durch manuelles Betätigen von zur Variation der Grundeinstellung am Scheinwerfer vorgesehenen Verstelleinrichtungen in seiner Abstrahlrichtung sowohl in vertikaler als auch in horizontaler Richtung justiert. Zu diesem Zweck wird in einem vorgegebenen Abstand zu dem Scheinwerfer ein Messschirm angeordnet. Auf dem Messschirm sind eine Horizontale HH und eine dazu senkrecht verlaufende Vertikale VV als Justierhilfe eingezeichnet. Der Scheinwerfer wird dann mittels der Verstelleinrichtungen derart justiert, dass eine Helldunkelgrenze der auf dem Messschirm abgebildeten Lichtverteilung des Scheinwerfers mit ihrem horizontalen Abschnitt auf der Gegenverkehrsseite um einen bestimmten Betrag, bspw. um 0,5°, insbesondere um 0,57°, unterhalb der Horizontalen HH verläuft (vertikale Grundeinstellung). Ferner wird der Scheinwerfer derart justiert, dass der horizontale Abschnitt der Helldunkelgrenze an der Vertikalen VV in einen 15°-Anstieg der Helldunkelgrenze übergeht (horizontale Grundeinstellung).

Aus dem Stand der Technik sind auch automatisch ablaufende Verfahren zur Grundeinstellung eines Scheinwerfers bekannt Ein solches Verfahren ist bspw. in der DE 20 2011 003 404 U1 beschrieben. Bei der automatischen Justierung werden in der Regel die Aktoren des Lichtmoduls, die eigentlich zur Realisierung der variablen Lichtverteilung dienen, genutzt, um das Lichtmodul in eine Grundstellung zu bringen. Solche Aktoren sind in dem Scheinwerfer bspw. zur Realisierung einer dynamischen Leuchtweiteregelung vorhanden, bei der das Lichtmodul um eine horizontale Drehachse in vertikaler Richtung geschwenkt wird, und/oder eines dynamischen Kurvenlichts, bei dem das Lichtmodul bei Kurvenfahrt um eine vertikale Drehachse in horizontaler Richtung geschwenkt wird, so dass das ausgesandte Lichtbündel in die Kurve hinein strahlt.

Bei dem aus der DE 20 2011 003 404 U1 bekannten Scheinwerfer kann ein Lichtmodul während eines bestimmungsgemäßen Betriebs des Scheinwerfers sowohl um eine horizontale Drehachse als auch um eine vertikale Drehachse verschwenkt werden. Die vollständige Grundeinstellung wird in zwei Schritten erreicht. Zum einen werden während der Montage des Fahrzeugs der Grundstellung entsprechenden Offset-Werte zu einem Referenzanschlag ermittelt und in einem Speicherelement abgespeichert. Zum anderen wird jedes Mal beim Einschalten des Lichtmoduls durch entsprechendes Ansteuern der Aktoren der Referenzanschlag angefahren. Anschließend werden die Aktoren mit den abgespeicherten Offset-Werten beaufschlagt, so dass das Lichtmodul in die Grundstellung bewegt wird. Ausgehend von dieser Grundstellung kann dann während des bestimmungsgemäßen Betriebs des Scheinwerfers die variable Lichtverteilung erzeugt werden.

Das bekannte Verfahren hat den Nachteil, dass bei jedem Einschalten des Lichtmoduls die Grundstellung des Lichtmoduls erst nach dem Anfahren des Referenzanschlags erreicht wird. Dabei verstreicht unnötige Zeit. Außerdem ist die Hin- und Herbewegung des Lichtmoduls von außerhalb des Kraftfahrzeugs aufgrund des Verschwenkens der Lichtbündels erkennbar, was störend sein kann. Außerdem wird durch das Anfahren des Referenzanschlags der Verstellmechanismus des Lichtmoduls (Stellmotor, Aktoren, Referenzanschlag) außerordentlich beansprucht. Erst nach dem Erreichen der Grundstellung kann das Lichtmodul den eigentlichen, bestimmungsgemäßen Betrieb aufnehmen.

Ausgehend von dem beschriebenen Stand der Technik liegt der vorliegenden Erfindung die Aufgabe zugrunde, eine Scheinwerferanordnung und einen Scheinwerfer mit einer automatischen Grundeinstellung der eingangs genannten Art dahingehend auszugestalten und weiterzubilden, dass eine die automatische Grundeinstellung des Scheinwerfers besonders zuverlässig vorgenommen werden kann.

Zur Lösung der Aufgabe wird eine Scheinwerferanordnung mit den Merkmalen des Anspruchs 1 und ein Verfahren mit den Merkmalen des Anspruchs 10 vorgeschlagen. Insbesondere wird eine Scheinwerferanordnung eines Kraftfahrzeugs vorgeschlagen, die mindestens einen Scheinwerfer zum Aussenden einer variablen Lichtverteilung aufweist. Der mindestens eine Scheinwerfer umfasst ein Scheinwerfergehäuse, ein darin beweglich gelagertes Lichtmodul, mindestens einen Aktor zum Bewegen des Lichtmoduls relativ zu dem Scheinwerfergehäuse und ein elektronisches Steuergerät zur Steuerung oder Regelung der Bewegung des Lichtmoduls zumindest während des bestimmungsgemäßen Betriebs des Scheinwerfers. Die Scheinwerferanordnung umfasst ferner eine erste Sensoreinheit, die ausgebildet ist, eine aktuelle Lage des Lichtmoduls im Raum in Absolutwerten zu erfassen und entsprechende Sensorsignale zu erzeugen, und eine zweite Sensoreinheit, die ausgebildet ist, eine aktuelle Lage einer Karosserie des Kraftfahrzeugs im Raum in Absolutwerten zu erfassen und entsprechende Sensorsignale zu erzeugen. Das Steuergerät ist ausgebildet, anhand der von der ersten Sensoreinheit und der zweiten Sensoreinheit erzeugten Sensorsignale ein Ansteuerungssignal für den mindestens einen Aktor zu generieren, um das mindestens eine Lichtmodul automatisch in eine vorgegebene Grundstellung für die variable Lichtverteilung zu bringen. Die Scheinwerferanordnung weist außerdem eine dritte Sensoreinrichtung auf, die mehrere Achssensoren des Kraftfahrzeugs, welche einen Weg oder Winkel einer Einfederung einer Achse des Kraftfahrzeugs relativ zu der Fahrzeugkarosserie erfassen, umfasst, und die für eine automatische Leuchtweiteregelung eine Neigung der Karosserie des Kraftfahrzeugs relativ zu einer Fahrbahn, auf der das Kraftfahrzeug fährt, erfasst und ausgebildet ist, ein entsprechendes Sensorsignal zu erzeugen. Das Steuergerät ist ausgebildet, das Ansteuerungssignal zur Grundeinstellung für den mindestens einen Aktor unter Berücksichtigung des von der dritten Sensoreinrichtung erzeugten Sensorsignals zu generieren.

Mit der vorliegenden Erfindung werden alle relevanten Größen, die für eine automatische Grundeinstellung des Lichtmoduls erforderlich sind, automatisch erfasst. Auf einen Referenzanschlag kann verzichtet werden. Diese Größen umfassen insbesondere die aktuelle Lage des Lichtmoduls im Raum in Absolutwerten und die aktuelle Lage der Fahrzeugkarosserie in Absolutwerten. Anhand der Sensorsignale wird automatisch ein Ansteuersignal für den mindestens Aktor generiert. Durch Beaufschlagen des mindestens einen Aktors mit dem generierten Ansteuersignal wird das Lichtmodul in die gewünschte Grundstellung gebracht. Das Ansteuersignal für den mindestens einen Aktor kann bspw. eine Winkelvorgabe sein, die einer Regeleinrichtung zur Regelung der aktuellen Neigung bzw. des aktuellen Verschwenkwinkels des Lichtmoduls in vertikaler und/oder horizontaler Richtung zugeführt wird. Die Regeleinrichtung zieht die Winkelvorgabe dann als Sollwert für die Lageregelung des Lichtmoduls heran.

Im Rahmen der Grundeinstellung des Scheinwerfers wird das Lichtmodul in eine definierte Lage relativ zu der Fahrzeugkarosserie gebracht. Dazu muss nach dem Einbau des Scheinwerfers in die Karosserie einmalig ein Wert für diese definierte Lage bestimmt werden. Der Wert ist abhängig von dem Fahrzeugtyp, von dem Scheinwerfertyp und von den Fertigungs-, Montage- und/oder Einbautoleranzen. Der Wert wird für jeden Scheinwerfer einzeln bestimmt und in einem dem Scheinwerfer zugeordneten Speicherelement abgespeichert. Das Speicherelement kann bspw. Teil des Steuergeräts des Scheinwerfers sein. Anhand der erfassten Absolutwerte für die Lage des Lichtmoduls und die Lage der Fahrzeugkarosserie können dann unter Berücksichtigung der abgespeicherten Werte für die Relativlage des Lichtmoduls bezüglich der Karosserie entsprechende Ansteuersignale für den mindestens einen Aktor des Scheinwerfers bestimmt werden. Durch Beaufschlagen des mindestens einen Aktors wird der Scheinwerfer in die entsprechende Relativlage und damit in seine Grundstellung gebracht. Diese Grundstellung behält der Scheinwerfer bei, unabhängig davon, ob das Fahrzeug beladen ist oder nicht und unabhängig von einer Neigung der befahrenen Fahrbahn.

Ausgehend von dieser Grundstellung kann das Lichtmodul dann ganz normal die variable Lichtverteilung während des bestimmungsgemäßen Betriebs erzeugen. So kann bspw. in Abhängigkeit von Messsignalen von Achssensoren, welche einen Weg oder Winkel einer Einfederung einer Achse des Kraftfahrzeugs relativ zu der Fahrzeugkarosserie erfassen, - ausgehend von der eingestellten Grundstellung des Scheinwerfers - eine automatische Leuchtweiteregelung des Scheinwerfers durch Verstellen des Lichtmoduls in vertikaler Richtung realisiert werden. Ferner kann bspw. in Abhängigkeit von Messsignalen eines Lenkwinkelsensors, der einen Winkel eines Lenkradeinschlags erfasst, - ausgehend von der eingestellten Grundstellung des Scheinwerfers - eine dynamische Kurvenlichtfunktion realisiert werden.

Mit der Erfindung ist es möglich, bspw. unmittelbar nach dem Einschalten des Scheinwerfers eine Grundeinstellung des Scheinwerfers durchzuführen, ohne zuvor einen Referenzierungsanschlag anfahren zu müssen. Die Grundeinstellung kann zu beliebigen Zeitpunkten - auch während des bestimmungsgemäßen Betriebs des Scheinwerfers - ausgeführt werden. Es ist auch denkbar, die Grundeinstellung während des Betriebs des Kraftfahrzeugs bei ausgeschaltetem Scheinwerfer auszuführen. Vorzugsweise steht das Fahrzeug oder bewegt sich in einer konstanten Fahrt (keine oder nur geringe Beschleunigung, keine oder nur geringe Kurvenfahrt). Die Grundeinstellung des Scheinwerfers geschieht vollautomatisch in einem einzigen Arbeitsgang. Dies wird dadurch erreicht, dass die dem Scheinwerfer bzw. der Kraftfahrzeugkarosserie zugeordneten Sensoreinheiten die Lage des Lichtmoduls im Raum als Absolutwert ermitteln, und nicht, wie aus dem Stand der Technik bekannt, relativ zu einem Referenzanschlag des Lichtmoduls. Nach dem erfindungsgemäßen Verfahren können auch Lichtmodule grundeingestellt werden, die nur ein Fernlicht, also gar keine Helldunkelgrenze als Justierungshilfe, erzeugen.

Die Sensoreinheiten der erfindungsgemäßen Scheinwerferanordnung können aktuelle Ist-Werte in der vertikalen und/oder horizontalen Raum-Ebene ermitteln. Im Steuergerät können auf Grund der Sensorsignale Ansteuersignale für den mindestens einen Aktor generiert werden, mit denen der mindestens eine Aktor beaufschlagt wird, um das Lichtmodul in die gewünschte Grundstellung zu bewegen.

Die Grundeinstellung wird vorzugsweise nicht kontinuierlich aktualisiert. Es ist ausreichend, wenn die Grundeinstellung zu diskreten Zeitpunkten erfolgt. Um nach einem erneuten Start des Kraftfahrzeugs bzw. einem erneuten Einschalten des Lichtmoduls auf Werte für die Ansteuersignale aus vorherigen Messungen zurückgreifen zu können, ist es denkbar, die ermittelten Werte in einem Speicherelement abzulegen, von wo sie dann beim Starten des Kraftfahrzeugs bzw. Einschalten des Lichtmoduls ausgelesen und die Aktoren damit beaufschlagt werden können. Alternativ oder zusätzlich ist es auch denkbar, die Sensorsignale der Sensoreinheiten auf dem Speicherelement abzuspeichern, so dass nach einem erneuten Start des Kraftfahrzeugs bzw. einem Einschalten des Lichtmoduls anhand der abgespeicherten Sensorsignale die Ansteuersignale für den mindestens einen Aktor generiert werden können.

Es ist denkbar, die verschiedenen Größen, die zur automatischen Grundeinstellung des Scheinwerfers erforderlich sind, jeweils durch mehrere Sensoreinrichtungen erfassen zu lassen. Vorzugsweise arbeiten die Sensoreinrichtungen, welche die gleiche Größe erfassen, nach unterschiedlichen technischen und/oder physikalischen Prinzipien. Auf diese Weise haben die Messergebnisse eine hohe Zuverlässigkeit und Festigkeit gegen externe Störungen. Es ist denkbar, die redundanten Sensorsignale der gleichen Größe zur Erhöhung der Genauigkeit miteinander zu verarbeiten (z.B. Mitteln, Gewichten, statistische Analyse, Integrieren der Sensorsignale), und die Ansteuersignale für den mindestens einen Aktor anhand der verarbeiteten Sensorsignale zu generieren.

Die erste Sensoreinheit umfasst mindestens eine erste Sensoreinrichtung, um die Lage des Lichtmoduls in vertikaler Richtung erfassen und ein entsprechendes erstes Sensorsignal erzeugen zu können. Die zweite Sensoreinheit umfasst mindestens eine zweite Sensoreinrichtung, um die Lage der Fahrzeugkarosserie in vertikaler Richtung erfassen und ein entsprechendes zweites Sensorsignal erzeugen zu können.

Die Scheinwerferanordnung weist eine dritte Sensoreinrichtung auf, die eine Neigung einer Fahrbahn, auf der das Kraftfahrzeug fährt, erfasst und ein entsprechendes drittes Sensorsignal erzeugt, und die Generierung des Ansteuerungssignals für den mindestens einen Aktor unter Mitberücksichtigung des dritten Sensorsignals erfolgt.

Mit Hilfe des dritten Sensorsignals kann anhand der Absolutwerte der Lage der Karosserie im Raum die Neigung der Fahrbahn ermittelt und bei der Grundeinstellung berücksichtigt werden. Das Sensorsignal der dritten Sensoreinrichtung kann insbesondere dazu genutzt werden, Fehler in den durch die ersten und zweiten Sensoreinheiten erzeugten Sensorsignalen, die durch ein auf einer schrägen Fahrbahn stehendes Fahrzeug hervorgerufen werden können, zu kompensieren.

Ferner ist es möglich, mit Hilfe des durch die dritte Sensoreinrichtung erzeugten Sensorsignals für eine Leuchtweiteregelung des Scheinwerfers zu sorgen. In diesem Fall wird also die Funktion der Leuchtweiteregelung in die Funktion der Grundeinstellung des Scheinwerfers integriert. Gemäß dieser Weiterbildung ist es also möglich, beim bestimmungsgemäßen Betrieb des Lichtmoduls (z.B. beim Erzeugen einer dynamischen Leuchtweitenregelung oder eines dynamischen Kurvenlichts) auf eine separate Grundeinstellung des Lichtmoduls zu verzichten. In diesem Fall würde die aktuelle Lage des Lichtmoduls als Absolutwert kontinuierlich ermittelt und mit einer abgespeicherten Sollwert der Lage des Lichtmoduls relativ zu der Karosserie verglichen werden. In Abhängigkeit davon wird das Ansteuersignal für den mindestens einen Aktor generiert und der mindestens eine Aktor dementsprechend angesteuert. Bei der Generierung der Ansteuersignale für den mindestens einen Aktor würden in diesem Fall sowohl die aktuellen Bedingungen für die Grundeinstellung als auch die aktuellen Bedingungen für die variable Lichtverteilung berücksichtigt werden, um Ansteuersignale für den mindestens einen Aktor zu generieren, die das Lichtmodul nicht erst in die Grundstellung, sondern gleich in die zur Erzeugung der variablen Lichtverteilung gewünschte Position bewegen.

Ferner ist es möglich, mit Hilfe des durch die dritte Sensoreinrichtung erzeugten Sensorsignals eine im Laufe der Zeit, z.B. durch Erschütterungen oder Stöße, veränderte Lage des Scheinwerfers im Kraftfahrzeug bei der Grundeinstellung zu berücksichtigen und automatisch zu kompensieren. Die Grundstellung des Scheinwerfers, insbesondere die Relativlage des Lichtmoduls relativ zur Karosserie, kann jederzeit ermittelt und eingestellt werden.

Die erste Sensoreinheit ist vorzugsweise an dem Lichtmodul befestigt. Dadurch folgt sie den Bewegungen des Lichtmoduls und kann jederzeit aktuelle Werte für die Lage des Lichtmoduls im dreidimensionalen Raum erfassen. Dementsprechend kann die zweite Sensoreinheit an dem Scheinwerfergehäuse befestigt sein, da dieses seinerseits an der Fahrzeugkarosserie befestigt ist und den Bewegungen der Karosserie folgt. Dadurch folgt die zweite Sensoreinheit den Bewegungen der Karosserie und kann jederzeit aktuelle Werte für die Lage der Karosserie im dreidimensionalen Raum erfassen. Insgesamt ergibt sich so eine integrale Scheinwerfereinheit, die bereits alle für die Durchführung des erfindungsgemäßen Verfahrens erforderlichen Sensoren umfasst.

Ferner wird vorgeschlagen, dass die zweite Sensoreinheit ein in dem Kraftfahrzeug sowieso bereits zu einem anderen Zweck vorhandene, geeignete Sensoreinrichtung umfasst, insbesondere eine Sensoreinrichtung eines aktiven Fahrwerkssystems (sog. Active Body Control) oder eines Fahrdynamiksystems (z.B. Antiblockiersystem (ABS), Antriebsschlupfregelung (ASR), Elektronisches Bremssystem (EBS) oder Elektronisches Stabilitätsprogramm (ESP)) des Kraftfahrzeugs. Diese Systeme können die für das erfindungsgemäße Verfahren erforderlichen Werte des von der zweiten Sensoreinheit erzeugten Sensorsignals, d.h. für die Lage der Karosserie im Raum, auf einen Datenbus (z.B. LIN, CAN, FlexRay, etc.) legen, von wo aus das Steuergerät des Scheinwerfers sie abgreifen und für das erfindungsgemäße Verfahren berücksichtigen kann. Es ist auch denkbar, dass das Steuergerät die Werte für das von der zweiten Sensoreinheit erzeugte Sensorsignal aus anderen Werten, die auf dem Datenbaus verfügbar sind, berechnet oder modelliert. Auf den Einbau zusätzlicher Sensoreinrichtungen kann somit verzichtet werden.

Gemäß einer weiteren vorteilhaften Weiterbildung der vorliegenden Erfindung wird vorgeschlagen, dass die erste Sensoreinheit einen Neigungssensor umfasst, der eine Neigung des Lichtmoduls zumindest in vertikaler Richtung erfasst. Zur Ermittlung der Lichtmodulneigung können bevorzugt Neigungssensoren verwendet werden, mit denen die Neigung gegenüber der durch die Schwerkraft vorgegebenen Lotrichtung ermittelt wird. Die Ermittlung wird vorzugsweise in einem stehenden oder mit konstanter Geschwindigkeit fahrenden Kraftfahrzeug durchgeführt. Damit wird verhindert, dass Beschleunigungskräfte die Ermittlung der Lage des Lichtmoduls beeinflussen.

Gemäß einer bevorzugten Ausführungsform der Erfindung wird vorgeschlagen, dass die mindestens eine zweite Sensoreinheit einen Neigungssensor umfasst, der eine Neigung der Kraftfahrzeugkarosserie zumindest um eine Querachse des Fahrzeugs erfasst. Durch Kenntnis über die aktuelle Neigung der Karosserie ist es möglich, das Lichtmodul in eine vorgegebene Lage relativ zu der Karosserie zu bewegen und den Scheinwerfer dadurch zumindest in vertikaler Richtung in seine Grundstellung zu bewegen. Eine horizontale Grundeinstellung des Scheinwerfers kann entweder manuell oder mittels zusätzlicher oder anderer Sensoren im Fahrzeug bzw. an dem Scheinwerfer und der Berücksichtigung der von diesen zusätzlichen Sensoren gelieferten Sensorsignale automatisch erfolgen.

Es wird vorgeschlagen, dass die Scheinwerferanordnung eine dritte Sensoreinrichtung aufweist, die eine Neigung der Karosserie des Kraftfahrzeugs relativ zu einer Fahrbahn, auf der das Kraftfahrzeug fährt, erfasst und ein entsprechendes drittes Sensorsignal erzeugt, und die Generierung des Ansteuerungssignals für den mindestens einen Aktor unter Mitberücksichtigung des dritten Sensorsignals erfolgt. Vorteilhafterweise kann als dritte Sensoreinrichtung eine in dem Kraftfahrzeug sowieso schon für andere Zwecke vorhandene, geeignete Sensoreinrichtung verwendet werden. Diesbezüglich wird vorgeschlagen, dass die dritte Sensoreinrichtung mehrere Achssensoren des Kraftfahrzeugs umfasst, die für eine automatische Leuchtweiteregelung einen Weg oder Winkel einer Einfederung einer Achse des Kraftfahrzeugs relativ zu der Karosserie erfassen. Anhand der Position der Achse kann (mit geringen Abweichungen, bspw. aufgrund der montierten Reifengröße oder des Luftdrucks der Reifen) auf die Position der Fahrbahn rückgeschlossen werden. Somit kann mittels der Achssensoren die Lage der Karosserie relativ zur Fahrbahn ermittelt werden. Vorzugsweise ist an jedem Achsschenkel ein separater Achssensor angeordnet. Als dritte Sensoreinrichtung können dann mehrere Achssensoren, besonders bevorzugt alle vier Achssensoren genutzt werden. Mit Hilfe der Achssensoren kann eine Lage der Karosserie relativ zu der Fahrbahn ermittelt werden. Zusammen mit den von der zweiten Sensoreinheit erzeugten Sensorsignalen kann so die Lage der Fahrbahn als Absolutwert ermittelt und bei der Generierung des Ansteuersignals für den mindestens einen Aktor berücksichtigt werden.

Alternativ wäre es auch denkbar, als dritte Sensoreinrichtung mindestens einen in eine Radnabe integrierten Neigungssensor zu verwenden. Vorteilhaft ist, dass in jeder Radnabe ein Neigungssensor integriert ist und als dritte Sensoreinrichtung mehrere dieser Neigungssensoren, vorzugsweise alle vier Neigungssensoren, dienen. Mittels des mindestens einen in die Radnabe integrierten Neigungssensors kann die Neigung der Fahrbahn unmittelbar als Absolutwert ermittelt werden. Zusammen mit den von der zweiten Sensoreinheit erzeugten Sensorsignalen, welche die Lage der Karosserie im Raum repräsentieren, kann die Relativlage der Karosserie zu der Fahrbahn bestimmt und die Leuchtweiteregelung des Scheinwerfers entsprechend realisiert werden.

Selbstverständlich können im Rahmen der Erfindung auch beliebig andere geeignete Sensoreinrichtungen zur Ermittlung der Lage des Lichtmoduls, der Lage der Karosserie und/oder der Neigung der Karosserie relativ zur Fahrbahn genutzt werden. Diese können bspw. optische Sensoren (z.B. Lasersensoren, Kameras, Infrarotsensoren, etc.) oder akustische Sensoren (z.B. Ultraschallsensoren, etc.) sein.

Um auch eine horizontale Grundeinstellung des Scheinwerfer realisieren zu können, ist es vorteilhaft, wenn die erste Sensoreinheit der Scheinwerferanordnung eine vierte Sensoreinrichtung zum Erfassen einer horizontalen Ausrichtung des Lichtmoduls im Raum, die ein entsprechendes viertes Sensorsignal erzeugt, und die zweite Sensoreinheit eine fünfte Sensoreinrichtung zum Erfassen einer horizontalen Ausrichtung der Karosserie des Kraftfahrzeugs im Raum aufweist, die ein entsprechendes fünftes Sensorsignal erzeugt, und die Generierung des Ansteuerungssignals für den mindestens einen Aktor unter Mitberücksichtigung der vierten und fünften Sensorsignale erfolgt. Denkbar wäre es bspw., dass die vierte und/oder die fünfte Sensoreinrichtungen zum Erfassen der horizontalen Lage des Lichtmoduls und/oder der Kraftfahrzeugkarosserie als ein (Erd-)Magnetfeldsensor oder als ein Gierraten- oder Drehratensensor ausgebildet ist. Ein Magnetfeldsensor kann eine Bewegungsrichtung (einen Kurs) des Lichtmoduls bzw. der Fahrzeugkarosserie erfassen. Ein Drehratensensor kann eine Gierrate des Lichtmoduls bzw. der Karosserie erfassen. Die Gierrate bezeichnet eine Winkelgeschwindigkeit der Drehung eines Gegenstands um eine (vertikal verlaufende) Hochachse. Die vierten und fünften Sensoreinrichtungen zum Erfassen der horizontalen Lage des Lichtmoduls und/oder der Kraftfahrzeugkarosserie können auch als beliebig andere geeignete Sensoren, bspw. als ein elektronischer oder digitaler Kompass, ausgebildet sein.

Um einen aktuellen Fahrzustand des Kraftfahrzeugs zu ermitteln und bei der Berechnung der Ansteuersignale für den mindestens einen Aktor berücksichtigen zu können, kann zusätzlich eine Fahrzeuggeschwindigkeit oder eine Fahrzeugbeschleunigung durch geeignete Sensoreinrichtungen ermittelt werden. Ebenfalls denkbar wäre es, die Daten eines Satelliten-Navigationssystems zu nutzen, die u.a. auch Daten über Fahrbahnsteigungen und Kurvenverläufe der Fahrbahn enthalten können. Ferner wäre es denkbar, Sensoren eines aktiven Fahrwerkssystems oder eines autonomen Bremssystems des Kraftfahrzeugs zu nutzen, die kontinuierlich die Fahrbahn vor dem Fahrzeug scannen und Daten über die Fahrbahn ermitteln.

Selbstverständlich ist es auch denkbar, dass die erste Sensoreinheit einen Drehratensensor umfasst, der eine Gierrate des mindestens einen Lichtmoduls erfasst (vierte Sensoreinrichtung). Aus der Gierrate kann auf die Lage des Lichtmoduls im Raum, insbesondere in horizontaler Richtung, geschlossen werden. Ferner ist es denkbar, dass die zweite Sensoreinheit einen Drehratensensor umfasst, der eine Gierrate des Kraftfahrzeugs bzw. der Karosserie erfasst (fünfte Sensoreinrichtung). Hiermit kann eine Fahrrichtung (ein Kurs) des Kraftfahrzeugs, d.h. die Lage der Karosserie, insbesondere in horizontaler Richtung, ermittelt werden. Die Gierraten werden über den jeweiligen Drehratensensor vorzugsweise bei fahrendem Kraftfahrzeug ermittelt. Gemäß dieser Ausführungsform könnte also eine automatische horizontale Grundeinstellung des Scheinwerfers realisiert werden. Die vertikale Grundeinstellung könnte entweder manuell oder mit geeigneten zusätzlichen Sensoren (den ersten und zweiten Sensoreinrichtungen) ebenfalls automatisch erfolgen.

Aus der Fahrrichtung des Kraftfahrzeugs und der Abstrahlrichtung des Lichtmoduls (Ist-Werte) kann im Steuergerät eine horizontale Winkel-Abweichung von einer horizontalen Grundeinstellung ermittelt werden. Durch einen Vergleich der Ist-Werte mit den Soll-Werten (den Vorgaben für die vertikale und/oder horizontale Grundeinstellung) kann anschließend im Steuergerät ein Ansteuerungssignal für den mindestens einen Aktor generiert werden, der das Lichtmodul um die vertikale bzw. die horizontale Drehachse automatisch in die vorgegebene Grundstellung bewegt, die vorzugsweise den gesetzlichen Vorgaben entspricht. Bei der Ermittlung der Gierraten für die Grundeinstellung kann die Funktion des dynamischen Kurvenlichts temporär ausgeschaltet werden, um eine Verfälschung der Messwerte zu verhindern.

Ergänzend ist vorgesehen, dass mindestens zwei Sensoreinrichtungen zusammen eine der integralen Sensoreinheiten bilden. Hierzu eignen sich bspw. die dem Lichtmodul zugeordneten ersten und vierten Sensoreinrichtungen (z.B. der Neigungssensor zur Ermittlung der Neigung des Lichtmoduls und der Drehratensensor zur Ermittlung der Gierrate des Lichtmoduls) und/oder die der Karosserie zugeordneten zweiten und fünften Sensoreinrichtungen (z.B. der Neigungssensor zur Ermittlung der Karosserieneigung um eine Querachse und der Drehratensensor zur Ermittlung der Gierrate der Karosserie des Kraftfahrzeugs). Die integralen Sensoreinheiten dienen insbesondere einer Platzersparnis, bspw. im Innern des Scheinwerfergehäuses. Außerdem kann dadurch Gewicht und Volumen eingespart werden. Auch eine kostengünstigere Fertigung einer integralen Sensoreinheiten ist möglich.

Sollte der Scheinwerfer nur einen einzigen Aktor, z.B. nur zur automatischen vertikalen oder nur zur automatischen horizontalen Verstellung, aufweisen oder sollte das Verfahren nur zur vertikalen oder nur zur horizontalen Grundeinstellung ausgebildet sein, so ist vorgesehen, dass die Grundeinstellung in der nicht automatisch einstellbaren Richtung durch eine manuell betätigbare Verstelleinrichtung erfolgt.

Ausführungsbeispiele der Erfindung sind in den Figuren dargestellt und werden in der nachfolgenden Beschreibung näher erläutert. Es zeigen, jeweils in einer schematischen Darstellung:

Figur 1    ein Kraftfahrzeug mit einem erfindungsgemäßen Scheinwerfer;

Figur 2    einen erfindungsgemäßen Kraftfahrzeugscheinwerfer in einer perspektivischen Ansicht;

Figur 3    eine Anordnung zur Realisierung des erfindungsgemäßen Verfahrens;

Figur 4    eine beispielhafte Situation eines Kraftfahrzeugs in der eine Grundeinstellung des Scheinwerfers nach dem erfindungsgemäßen Verfahren vorgenommen werden kann;

Figur 5    eine beispielhafte Situation eines Kraftfahrzeugs in der eine Grundeinstellung des Scheinwerfers nach dem erfindungsgemäßen Verfahren vorgenommen werden kann;

Figur 6    eine beispielhafte Situation eines Kraftfahrzeugs in der eine Grundeinstellung des Scheinwerfers nach dem erfindungsgemäßen Verfahren vorgenommen werden kann;

Figur 7    eine beispielhafte Situation eines Kraftfahrzeugs in der eine Grundeinstellung des Scheinwerfers nach dem erfindungsgemäßen Verfahren vorgenommen werden kann;

Figur 8    ein Kraftfahrzeug bei einer Geradeausfahrt in einer Draufsicht;

Figur 9    ein Kraftfahrzeug bei einer konstanten Kurvenfahrt in einer Draufsicht; und

Figur 10   einen Kurs eines Kraftfahrzeugs und eine Abstrahlrichtung der Lichtmodule bei einer Geradeausfahrt und einer konstanten Kurvenfahrt.

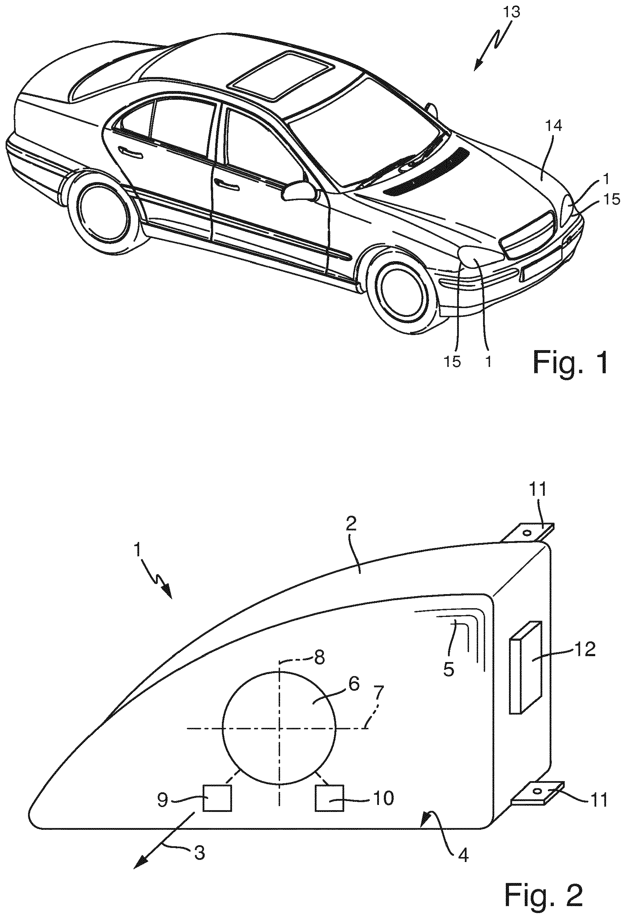

In Figur 1 ist ein Kraftfahrzeug in seiner Gesamtheit mit dem Bezugzeichen 13 bezeichnet. In eine entsprechend ausgebildete Einbauöffnung 15 einer Karosserie 14 des Kraftfahrzeugs 13 ist im Frontbereich beidseitig jeweils ein Scheinwerfer 1 der erfindungsgemäßen Scheinwerferanordnung eingebaut.

In Figur 2 ist eine bevorzugte Ausführungsform des Kraftfahrzeugscheinwerfers 1 schematisch dargestellt. Der Scheinwerfer 1 umfasst ein Scheinwerfergehäuse 2, das vorzugsweise aus Kunststoff gefertigt ist. Das Scheinwerfergehäuse 2 weist in einer Lichtaustrittsrichtung 3 eine Lichtaustrittsöffnung 4 auf, die durch eine transparente Abdeckscheibe 5 verschlossen ist, um ein Eindringen von Staub, Schmutz oder Feuchtigkeit in das Innere des Scheinwerfers 1 zu verhindern. Die Abdeckscheibe 5 besteht aus Kunststoff oder Glas und kann als eine klare Scheibe ohne optisch wirksame Elemente oder als eine Streuscheibe mit optisch wirksamen Elementen, bspw. in Form von Zylinderlinsen oder Prismen, ausgebildet sein.

Im Inneren des Scheinwerfers 1 ist ein Lichtmodul 6 angeordnet, das lediglich schematisch dargestellt ist. Das Lichtmodul 6 kann beispielsweise als ein sogenanntes Reflexionsmodul ausgebildet sein. Ein Reflexionsmodul umfasst mindestens eine Lichtquelle, bspw. in Form einer Glühlampe, Gasentladungslampe oder Halbleiterlichtquelle, zum Aussenden von Licht sowie eine bspw. als Reflektor ausgebildete Primäroptik zum Bündeln des ausgesandten Lichts. Der Reflektor reflektiert das von der Lichtquelle ausgesandte Licht im Wesentlichen in Lichtaustrittsrichtung 3 zur Erzeugung einer gewünschten Lichtverteilung auf die Fahrbahn vor das Kraftfahrzeug 13. Der Reflektor ist vorzugsweise als ein Freiformreflektor ausgebildet, der die gewünschte Lichtverteilung ohne zusätzliche optisch wirksame Elemente im Strahlengang erzeugt. Die Primäroptik kann aber auch als ein lichtdurchlässiger Körper aus Glas oder Kunststoff ausgebildet sein (sog. TIR (total internal reflection)-Vorsatzoptik), wobei die Bündelung des Lichts dann durch Brechung beim Eintritt in den Körper und/oder beim Austritt aus dem Körper und/oder durch Totalreflexion an äußeren Grenzflächen des Körpers erfolgt.

Alternativ kann das Lichtmodul 6 auch als ein sogenanntes Projektionsmodul ausgebildet sein, wobei von der Lichtquelle ausgesandtes Licht nach der Bündelung durch die Primäroptik durch eine Sekundäroptik (z.B. eine Sammellinse) zur Erzeugung einer gewünschten Lichtverteilung auf der Fahrbahn vor dem Fahrzeug 13 abgebildet wird.

Das Lichtmodul 6 kann zur Realisierung einer Leuchtweitenregulierung um eine im Wesentlichen horizontale Drehachse 7 relativ zum Scheinwerfergehäuse 2 verschwenkt werden. Ferner kann das Lichtmodul 6 zur Realisierung einer dynamischen Kurvenlichtfunktionalität, das heißt zum horizontalen Verschwenken des ausgesandten Lichtbündels während einer Kurvenfahrt, um eine im Wesentlichen vertikale Drehachse 8 relativ zum Scheinwerfergehäuse 2 verschwenkt werden. Zur Realisierung der Verschwenkbewegung um die horizontale Drehachse 7 umfasst das Lichtmodul 6 einen geeigneten Aktor 9. Zum Verschwenken des Lichtmoduls 6 um die vertikale Drehachse 8 verfügt das Lichtmodul 6 über einen geeigneten Aktor 10. Die Aktoren 9, 10 sind vorzugsweise als Elektromotoren, insbesondere als entsprechend ausgebildete Schrittmotoren, gebildet.

Das Lichtmodul 6 dient bspw. zur Erzeugung einer abgeblendeten Lichtverteilung und/oder eines Fernlichts. Bei einem sog. Bi-Xenon-Modul kann das Lichtmodul zwischen Abblendlicht und Fernlicht umgeschaltet werden. Bei einem sog. adaptiven Lichtmodul kann das Lichtmodul zwischen einer Vielzahl unterschiedlicher Lichtverteilungen (z.B. Stadtlicht, Landstraßenlicht, Autobahnlicht, Schlechtwetterlicht, Fernlicht etc.) umgeschaltet werden. Die durch das Lichtmodul 6 erzeugte abgeblendete Lichtverteilung weist eine horizontale Helldunkelgrenze auf. Zur Erzeugung der abgeblendeten Lichtverteilung kann bspw. bei einem Projektionsmodul zwischen der Primäroptik (z.B. Reflektor oder Vorsatzoptik zum Bündeln des von der Lichtquelle ausgesandten Lichts) und der Sekundäroptik (z.B. Reflektor oder Linse zum Abbilden des Lichts auf der Fahrbahn vor dem Fahrzeug 13) im Strahlengang eine Blendenanordnung angeordnet sein, welche einen Teil des von der Primäroptik gebündelten Lichts abschattet. Eine Oberkante der Blendenanordnung wird von der Sekundäroptik zur Erzeugung der Helldunkelgrenze auf die Fahrbahn vor das Fahrzeug 13 projiziert. Zur Realisierung einer adaptiven Lichtverteilung kann die Blendenanordnung verschiedene Oberkanten mit unterschiedlichen Konturen in den Strahlengang bewegen.

Zusätzlich zu dem in Figur 2 dargestellten Lichtmodul 6 können in dem Scheinwerfergehäuse 2 auch noch weitere Lichtmodule und/oder Leuchtenmodule (nicht dargestellt) vorgesehen sein. Das mindestens eine weitere Lichtmodul kann entweder zur Erzeugung einer oder mehrerer anderer Lichtverteilungen oder zur Erzeugung einer gewünschten Lichtverteilung im Zusammenwirken mit dem von dem Lichtmodul 6 ausgesandten Licht ausgebildet sein. Die Leuchtenmodule können beispielsweise ein Tagfahrlicht, ein Blinklicht, ein Positions- oder Begrenzungslicht oder eine beliebig andere Leuchtfunktion erzeugen.

An der Außenseite des Scheinwerfergehäuses 2 ist ein Steuergerät 12 des Scheinwerfers 1 angeordnet. Selbstverständlich kann das Steuergerät 12 auch im Inneren des Gehäuses 2 oder in einer Entfernung außerhalb des Gehäuses 2, bspw. im Motorraum oder an einer anderen Stelle im Fahrzeug 13, angeordnet sein. Das Steuergerät 12 steuert oder regelt die Bewegung des Lichtmoduls 6 um die horizontale Drehachse 7 beziehungsweise die vertikale Drehachse 8 während des bestimmungsgemäßen Betriebs des Scheinwerfers 1. Zusätzlich kann das Steuergerät den Betrieb der Lichtquelle, insbesondere wenn diese als eine Gasentladungslampe oder als eine oder mehrere Leuchtdioden ausgebildet ist, steuern oder regeln. Der Begriff "während des bestimmungsgemäßen Betriebs" bedeutet, dass das Lichtmodul 6 bei eingeschaltetem Scheinwerfer 1 zur Ausleuchtung der Fahrbahn vor dem Kraftfahrzeug 13 bspw. zur Realisierung einer Leuchtweitenregelung um die horizontale Drehachse 7 und/oder zur Realisierung einer dynamischen Kurvenlichtfunktionalität um die vertikale Drehachse 8 verschwenkt wird. Zu diesem Zweck beaufschlagt das Steuergerät 12 die Aktoren 9, 10 mit entsprechenden Ansteuersignalen, die das Steuergerät 12 bei der dynamischen Leuchtweiteregulierung bzw. Kurvenlichtfunktion anhand von Fahrzeugdaten und/oder Umgebungsinformationen generiert.

Dabei ist es allerdings auch denkbar, dass das Steuergerät 12 lediglich für die Realisierung der Kurvenlichtfunktionalität zuständig ist. Das Einstellen der Leuchtweite muss nicht notwendigerweise dynamisch erfolgen, sondern kann im Stand der Technik bei der sogenannten statischen Leuchtweiteregelung auch manuell durch den Fahrer des Kraftfahrzeugs 13 über ein entsprechendes Betätigungselement (z.B. Schalter oder Drehrad) im Innenraum des Fahrzeugs 13 realisiert werden. Auch bei der statischen Leuchtweitenregelung kommt in aller Regel der elektrische Aktor 9 zum Einsatz, der entweder direkt von dem Betätigungselement oder indirekt über das Steuergerät 12 angesteuert wird.

Zum Einbau des Scheinwerfers 1 in das Kraftfahrzeug 13 wird dieser in die dafür vorgesehenen Einbauöffnung 15 in der Fahrzeugkarosserie 14 im Frontbereich des Kraftfahrzeugs 13 eingesetzt und über geeignete Befestigungselemente an der Karosserie 14 befestigt. Als ein mögliches Beispiel für eine Ausgestaltung der Befestigungselemente sind in Figur 2 Befestigungslaschen 11 dargestellt. Der Scheinwerfer 1 kann auf beliebiger Weise an der Kraftfahrzeugkarosserie 14 befestigt werden. Bevorzugt ist insbesondere ein Festschrauben oder ein Einclipsen des Scheinwerfers 1. Vorzugsweise ist der Scheinwerfer 1 an drei Stellen an der Karosserie 14 befestigt, um eine definierte Position des Scheinwerfers 1 relativ zu der Karosserie 14 sicherzustellen.

Aufgrund von Toleranzen und Ungenauigkeiten bei der Fertigung, Montage und/oder beim Einbau des Scheinwerfers 1 kann es vorkommen, dass der eingebaute und an der Karosserie 14 befestigte Scheinwerfer 1 nicht genau in der gewünschten Weise ausgerichtet ist und Licht nicht in der gewünschten oder gesetzlich vorgegebenen Lichtaustrittsrichtung aussendet. Dadurch kann es zu einer nur unzureichenden Ausleuchtung der Fahrbahn von dem Kraftfahrzeug 13 und/oder zu einer Blendung entgegenkommender oder vorausfahrender Verkehrsteilnehmer kommen. Um dies zu verhindern und um die Fertigungs-, Montage- und Einbautoleranzen auszugleichen, ist es im Stand der Technik vorgesehen, den Scheinwerfer 1 nach dem Einbau in der Kraftfahrzeugkarosserie 14 beziehungsweise zu beliebigen Zeitpunkten während der Lebensdauer des Kraftfahrzeugs 13, beispielsweise im Rahmen von Werkstattaufenthalten oder technischen Überprüfungen des Fahrzeugs 13 während einer Hauptuntersuchung (TÜV), bezüglich der Kraftfahrzeugkarosserie 14 in eine Grundstellung zu bringen, d.h. zu justieren. Dabei kann eine Grundeinstellung des Scheinwerfers 1 sowohl in vertikaler als auch in horizontaler Richtung mit dem Ziel erfolgen, die tatsächliche Lichtaustrittsrichtung 3 des Scheinwerfers 1 in die gewünschte beziehungsweise vorgeschriebene Richtung zu bringen.

Bei einer manuellen Grundeinstellung wird in einem definierten Abstand zu dem Lichtmodul 6 ein senkrecht stehender Messschirm angeordnet, auf dem eine Horizontale HH und eine dazu senkrecht stehende Vertikale VV eingezeichnet sind. Zur Grundeinstellung des Scheinwerfers 1 muss eine Helldunkelgrenze einer auf dem Messschirm abgebildeten Lichtverteilung des Lichtmoduls 6 in eine definierte Position gebracht werden. Die Helldunkelgrenze umfasst bspw. gemäß ECE-Regelung einen ersten horizontalen Abschnitt auf der Gegenverkehrsseite, einen zweiten gegenüber dem ersten Abschnitt höher angeordneten horizontalen Abschnitt und einen Zwischenabschnitt zwischen den beiden horizontalen Abschnitten, der einen 15°-Anstieg umfasst. Zur vertikalen Grundeinstellung muss das Lichtmodul 6 derart ausgerichtet werden, dass der horizontale Abschnitt auf der Gegenverkehrsseite etwa 0,5° unterhalb der Horizontalen HH verläuft (genau bei -0,57°). Zur horizontalen Grundeinstellung muss das Lichtmodul 6 derart ausgerichtet werden, dass der horizontale Abschnitt auf der Gegenverkehrsseite bei der Vertikalen VV in den ansteigenden Zwischenabschnitt übergeht.

Die Grundeinstellung wird nach dem Stand der Technik bisher mittels manuell betätigter Verstelleinrichtungen realisiert, die von außerhalb des Scheinwerfergehäuses 2 aus betätigt werden.

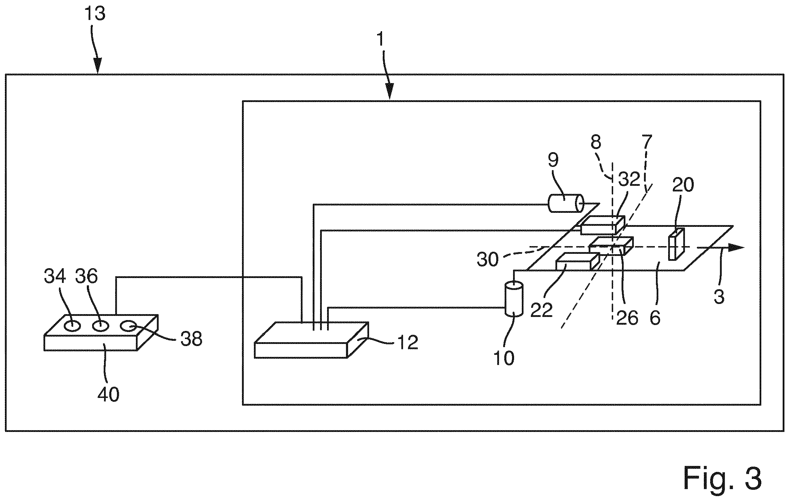

Erfindungsgemäß wird eine Scheinwerferanordnung mit mindestens einem Scheinwerfer 1 und ein Verfahren vorgeschlagen, das eine einfache und zuverlässige automatische Grundeinstellung des Scheinwerfers 1 ermöglicht. Figur 3 zeigt beispielhaft und schematisch eine Anordnung zur Realisierung des erfindungsgemäßen Verfahrens zur automatischen Grundeinstellung des Scheinwerfers 1 bzw. des Lichtmoduls 6.

Die Lichtquelle des Scheinwerfers 1 bzw. des Lichtmoduls 6 und die der Lichtquelle zugeordnete Primäroptik mit Sekundäroptik (alternativ) ist symbolisch durch den Block 20 dargestellt. Eine erste Sensoreinheit des Scheinwerfers 1 weist darüber hinaus eine erste Sensoreinrichtung in Form eines Neigungssensors 22 auf, der eine Neigung des Lichtmoduls 6 in vertikaler Richtung, also eine Verschwenkbewegung um die horizontale Drehachse 7, erfasst. Der Neigungssensor 22 ist dazu bevorzugt an dem Lichtmodul 6 befestigt. Zur Ermittlung der Lichtmodulneigung werden bevorzugt Neigungssensoren 22 verwendet, mit denen die Neigung gegenüber der durch die Schwerkraft vorgegebenen Lotrichtung ermittelt werden kann.

Ferner weist die erste Sensoreinheit des Scheinwerfers 1 bzw. des Lichtmoduls 6 eine vierte Sensoreinrichtung in Form eines Drehratensensors 26 auf, der eine Gierrate des Lichtmoduls 6 erfasst. Die Gierrate bezeichnet eine Winkelgeschwindigkeit der Drehung des Lichtmoduls 6 um die vertikale Drehachse 8 (Hochachse). Auch der Drehratensensor 26 ist dazu bevorzugt an dem Lichtmodul 6 befestigt. Aus der Gierrate kann auf eine Abstrahlrichtung des Lichtmoduls 6 in horizontaler Richtung geschlossen werden. Alternativ kann zur Ermittlung des Kurses (Bewegungsrichtung) des Lichtmoduls 6 auch ein Erdmagnetfeldsensor oder ein Kompass verwendet werden (nicht dargestellt), der unmittelbar den Kurs des Lichtmoduls 6 liefert, welcher einer horizontalen Ausrichtung des Lichtmoduls 6 entspricht.

Die Signale des Neigungssensors 22 und des Drehratensensors 26 werden in einem Auswertemodul 32 bewertet. Das Ergebnis wird dem Steuergerät 12 zur Verfügung gestellt. Das Auswertemodul 32 könnte dazu auch in dem Steuergerät 12 integriert sein.

Dem Scheinwerfer 1 können zur automatischen Grundeinstellung weitere Sensoreinrichtungen zugeordnet sein, die am Kraftfahrzeug 13, insbesondere an dessen Karosserie 14, angeordnet sind. So ist an der Karosserie 14 eine zweite Sensoreinrichtung in Form eines Neigungssensors 34 angeordnet, der eine Neigung der Kraftfahrzeugkarosserie 14 in vertikaler Richtung erfasst. Dazu können Neigungssensoren vom gleichen Typ des dem Lichtmodul 6 zugeordneten Neigungssensor 22 verwendet werden, mit denen die Neigung gegenüber der durch die Schwerkraft vorgegebenen Lotrichtung ermittelt wird.

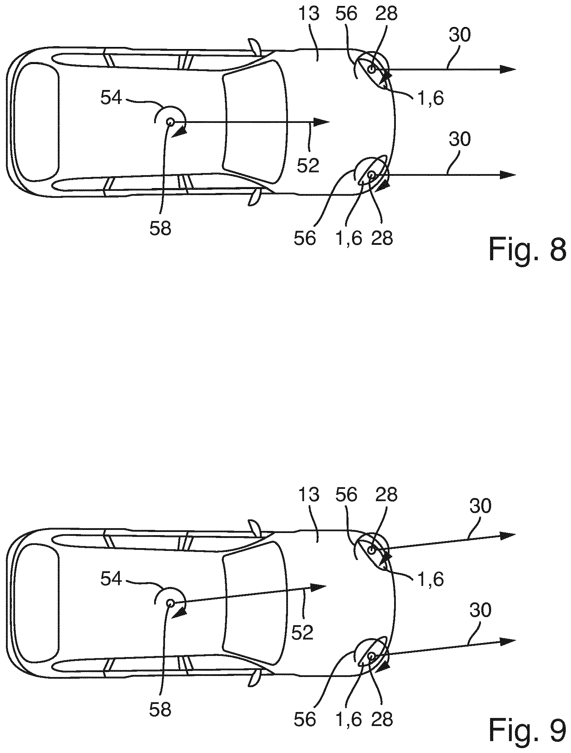

Außerdem ist an der Karosserie 14 eine fünfte Sensoreinrichtung in Form eines Drehratensensors 36 angeordnet, der eine Gierrate der Kraftfahrzeugkarosserie 14 erfasst. Die Gierrate bezeichnet eine Winkelgeschwindigkeit der Drehung der Karosserie 14 um eine (vertikal verlaufende) Hochachse 58 (siehe Figuren 8 bis 10). Aus der Gierrate kann auf eine Fahrrichtung (einen Kurs) des Kraftfahrzeugs 13 geschlossen werden. Der Kurs gibt die Fahrrichtung des Kraftfahrzeugs 13 an und entspricht einer horizontalen Ausrichtung der Karosserie 14.

Des Weiteren ist an der Karosserie 14, insbesondere an den Fahrwerkachsen des Kraftfahrzeugs 13, eine dritte Sensoreinrichtung in Form eines Achssensors 38 angeordnet, der einen Weg oder Winkel einer Einfederung der Kraftfahrzeugkarosserie 14 relativ zu einer Fahrbahn, auf der das Fahrzeug 13 fährt oder steht, erfasst. Dadurch kann bspw. ein Beladungszustand des Kraftfahrzeugs 13 und damit eine Neigung der Karosserie 14 um eine Querachse ermittelt und bei der Grundeinstellung mit berücksichtigt werden. Der Weg oder Winkel der Einfederung wird auch als Nickwinkel bezeichnet. Statt eines Achssensors 38 können auch Neigungssensoren verwendet werden, mit denen eine Neigung über mikroelektromechanische Systeme ermittelt wird, die z.B. Feder-Masse-Systeme nutzen, und welche die Auslenkung kleiner Testmassen relativ zu einem am Kraftfahrzeug 13 fixierten Bauelement bestimmen.

Andere Sensoreinrichtungen zur Ermittlung der Einfederung arbeiten z.B. mit Flüssigkeiten. Sie nutzen entweder die Reflexion oder Brechung eines Lichtstrahls an oder in einer geeigneten Flüssigkeit oder führen eine Widerstandsmessung bzw. Kapazitätsmessung in Abhängigkeit von der Lage der Flüssigkeit durch.

Die im Lichtmodul 6 und an der Karosserie 14 des Kraftfahrzeugs 13 angeordneten Sensoreinrichtungen sind nicht auf die genannten beschränkt, sondern können insbesondere zu einer Verbesserung der Genauigkeit und Zuverlässigkeit der automatischen Grundeinstellung durch weitere Sensoreinrichtungen ergänzt werden. Auch eine redundante Ermittlung der Messgrößen anhand von jeweils mehreren Sensoreinrichtungen ist denkbar. Dabei kommen bei den redundanten Sensoreinrichtungen vorzugsweise unterschiedliche technische Verfahren und physikalische Prinzipien zum Einsatz. Durchaus denkbar ist bspw. auch die zusätzliche Erfassung der Kraftfahrzeuggeschwindigkeit, der Kraftfahrzeugbeschleunigung oder des Reifendrucks. Ein unterschiedlicher Reifendruck des Kraftfahrzeugs bspw. kann eine zusätzliche Neigung des Kraftfahrzeugs hervorrufen, was die Grundeinstellung beeinflussen kann.

Der Neigungssensor 34 und der Drehratensensor 36 der zweiten Sensoreinheit und der Neigungssensor 38 sind in Figur 3 zu einer integralen Einheit 40 zusammengefasst. Die Signale des Neigungssensors 34, des Drehratensensors 36 und des Neigungssensors 38 werden von der integralen Einheit 40 zum Steuergerät 12 gesendet. Auch die im Lichtmodul 6 angeordneten Sensoreinrichtungen (Neigungssensor 22 und Drehratensensor 26) der ersten Sensoreinheit könnten möglicherweise zu einer integralen Einheit zusammengefasst werden (nicht dargestellt) und führen so zu einer kompakten Anordnung und Bauweise der Sensoreinrichtungen. Es ist ferner denkbar, die Sensoreinrichtungen 34 und 36 unmittelbar an dem Scheinwerfergehäuse 2 zu befestigen, da dieses der Bewegung der Fahrzeugkarosserie 14 folgt.

Das Lichtmodul 6 muss vor dem bestimmungsgemäßen Betrieb (z.B. dynamische Leuchtweitenregulierung und/oder dynamisches Kurvenlicht) in vertikaler und horizontaler Richtung in die vorgesehene Grundstellung gebracht werden. Dazu werden im erfindungsgemäßen Scheinwerfer 1 bevorzugt die gleichen Aktoren 9 und 10 verwendet, die während des bestimmungsgemäßen Betriebs zum Verschwenken des Lichtmoduls 6 im Rahmen der Leuchtweiteregelung verwendet werden. Der Aktor 10 bewegt das Lichtmodul 6 in horizontaler Richtung, also um die vertikale Drehachse 8, der Aktor 9 bewegt dabei das Lichtmodul 6 in vertikaler Richtung, also um die horizontale Drehachse 7. Die entsprechende vertikale Stellung des Lichtmoduls 6 wird dabei durch den Neigungssensor 22, und die entsprechende horizontale Stellung des Lichtmoduls 6 wird durch den Drehratensensor 26 des Lichtmoduls 6 erfasst.

Um das Lichtmodul 6 in vertikaler Richtung in eine Grundstellung zu bewegen, werden die ersten und zweiten Sensorsignale der Sensoreinrichtungen 22 und 34 benötigt. Diese erfassen die Neigung des Lichtmoduls 6 bzw. der Karosserie 14 in vertikaler Richtung. Dies erlaubt eine Verstellung des Lichtmoduls 6 in vertikaler Richtung in eine vorgegebene Relativlage zu der Karosserie 14. Dementsprechend werden für eine Grundeinstellung des Lichtmoduls 6 in horizontaler Richtung die vierten und fünften Sensorsignale der Sensoreinrichtungen 26 und 36 benötigt. Diese erfassen über eine Gierrate die horizontale Ausrichtung des Lichtmoduls 6 bzw. der Karosserie 14. Dies erlaubt eine Verstellung des Lichtmoduls 6 in horizontaler Richtung in eine vorgegebene Relativlage zu der Karosserie 14. Es ist denkbar, dass der erfindungsgemäße Scheinwerfer 1 lediglich die ersten und zweiten Sensoreinrichtungen 22, 34 zur Realisierung einer vertikalen Grundeinstellung des Scheinwerfers 1 aufweist. In diesem Fall könnte die horizontale Grundeinstellung des Scheinwerfers 1 in herkömmlicher Weise manuell erfolgen. Ebenso ist es denkbar, dass der Scheinwerfer 1 lediglich die vierten und fünften Sensoreinrichtungen 26, 36 zur Realisierung einer horizontalen Grundeinstellung des Scheinwerfers 1 aufweist. In diesem Fall könnte die vertikale Grundeinstellung des Scheinwerfers 1 in herkömmlicher Weise manuell erfolgen.

Die dritte Sensoreinrichtung 38 dient insbesondere dazu, zusätzlich zu der automatischen Grundeinstellung des Scheinwerfers 1 eine Leuchtweitenregelung zu realisieren, damit das Lichtmodul 6 in Abhängigkeit von einer Beladung oder einem Nickwinkel des Fahrzeugs 13 stets eine vorgegebene Ausrichtung in vertikaler Richtung aufweist, um einerseits eine gute Ausleuchtung der Fahrbahn vor dem Fahrzeug sicherzustellen und andererseits eine Blendung anderer Verkehrsteilnehmer zu verhindern. Die dritte Sensoreinrichtung 38 kann aber auch dazu dienen, eine Plausibilitätsprüfung der ersten und zweiten und/oder vierten und fünften Sensorsignale bzw. eine Korrektur dieser Signale durchzuführen.

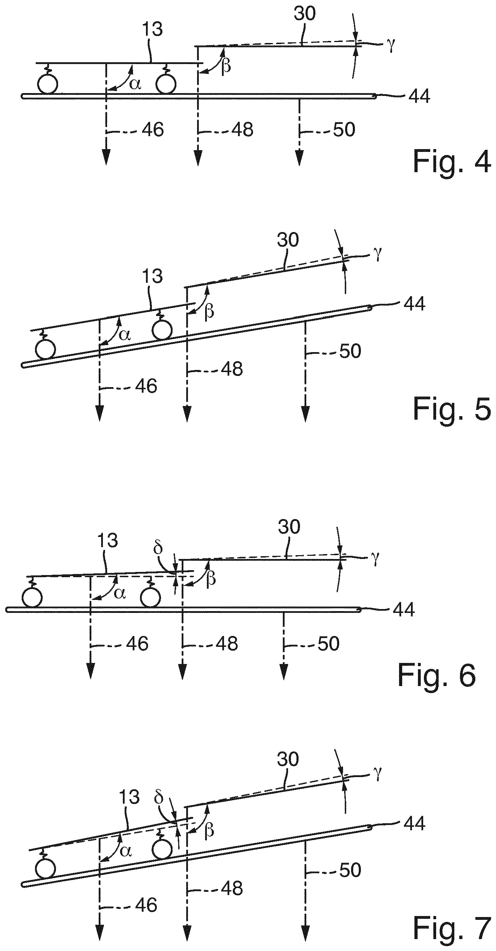

An Hand der Figuren 4 bis 7 wird das erfindungsgemäße Verfahren zur automatischen Grundeinstellung des Scheinwerfers 1 in vertikaler Richtung erläutert. Dabei kommen die Sensoren 22 (zur Ermittlung der Lage des Lichtmoduls 6 in vertikaler Richtung) und 34 (zur Ermittlung der Lage der Karosserie 14 in vertikaler Richtung) zur Anwendung. Durch Ergänzung dieser Sensoren durch die weiteren Sensoren 26 (zur Ermittlung der horizontalen Lage des Lichtmoduls 6) und 36 (zur Ermittlung der horizontalen Lage der Karosserie 14) könnte der Scheinwerfer 1 zusätzlich auch noch in die horizontale Grundstellung gebracht werden.

Figur 4 zeigt das Kraftfahrzeug 13 auf einer horizontal verlaufenden, ebenen Fahrbahn 44. Über den Neigungssensor 34 wird ein Winkel $\alpha$ ermittelt, der der Lage der Karosserie 14 des Kraftfahrzeugs 13 zu einem Lot 46 des Fahrzeugs 13 (Lot ist zum Erdmittelpunkt gerichtet) entspricht. Dadurch kann die Lage der Karosserie 14 in vertikaler Richtung als Absolutwert ermittelt werden. Über den Neigungssensor 22 wird ein Winkel $\beta$ ermittelt, der der Abstrahlrichtung des Lichtmoduls 6 zu einem Lot 48 des Lichtmoduls 6 entspricht. Dadurch kann die Lage des Lichtmoduls 6 in vertikaler Richtung als Absolutwert ermittelt werden. Als Referenz für die Abstrahlrichtung des Lichtmoduls 6 ist in den Figuren 4 bis 7 ersatzweise eine optische Achse 30 des Lichtmoduls 6 eingezeichnet. Die Ermittlung wird derart ausgeführt, dass der ermittelte Winkel $\beta$ im Wesentlichen einem Winkel der optischen Achse 30 des Lichtmoduls 6 zum Lichtmodullot 48 entspricht. Da in der Regel die optische Achse 30 des Lichtmoduls 6 gemäß gesetzlicher Vorgaben leicht, in der Regel um einen vorgegebenen Winkel $\chi < 1°$ (z.B. $\chi = 0{,}57°$), zur Fahrbahn 44 hin geneigt ist, wird durch den Neigungssensor 22 ein Winkel $\beta$ ermittelt, der vom Winkel $\alpha$ abweicht. Das Lichtmodul 6 wird also in eine vorgegebene Relativposition zu der Karosserie 14 gebracht. Es gilt:

$$\beta = \alpha + \chi$$

Die Figuren 4 bis 7 zeigen zusätzlich ein Lot 50 der Fahrbahn 44, das die Basis für die Ermittlung durch die Neigungssensoren 34 und 22 bildet. Die Grundeinstellung kann jederzeit - also auch auf einer ansteigenden oder abfallenden Fahrbahn 44 - durchgeführt werden. Es gelten hierbei grundsätzlich die gleichen Gesetzmäßigkeiten wie bei einer horizontal verlaufenden, ebenen Fahrbahn 44.

Figur 5 zeigt dazu das Kraftfahrzeug 13 beispielhaft auf einer ansteigenden Fahrbahn 44. Über den Neigungssensor 34 wird wie bekannt der Winkel $\alpha$ ermittelt, der der Lage der Karosserie 14 zum Fahrzeuglot 46 entspricht. Bei ansteigender oder abfallender Fahrbahn entspricht der Winkel $\alpha$ der Fahrbahnneigung gegenüber dem Fahrzeuglot 46. Der Neigungssensor 22 ermittelt den Winkel $\beta$, der der Abstrahlrichtung des Lichtmoduls 6 zu einem Lichtmodullot 48 entspricht. Auch hier werden die Signale der Neigungssensoren 34 und 22 zusammen mit dem dritten Sensorsignal der dritten Sensoreinrichtung 38 an das Steuergerät 12 gesendet. Dort wird anschließend ein Ansteuersignal für den Aktor 9 generiert, der das Lichtmodul 6 solange in vertikaler Richtung um die horizontale Drehachse 7 bewegt, bis der Einstellwinkel $\beta$ für das Lichtmodul 6 folgender Formel entspricht (Soll-Vorgabe):

$$\beta = \alpha - \chi \qquad (A)$$

Das gleiche Verfahren gilt in entsprechender Weise auch für eine abfallende Fahrbahn 44. Die Ermittlung wird vorzugsweise bei stehendem oder mit konstanter Geschwindigkeit in einem stationären Fahrtzustand (ohne Abbremsen und Beschleunigen, ohne schnelle Kurvenfahrt) fahrendem Kraftfahrzeug 13 durchgeführt.

Eine Einfederung des Fahrzeugs 13 hat keinen Einfluss auf die Grundeinstellung des Scheinwerfers 1. Diese erfolgt nach wie vor dadurch, dass das Lichtmodul 6 in vertikaler und/oder horizontaler Richtung in die vorgegebene Relativposition zu der Karosserie 14 bewegt wird. Wenn jedoch zusätzlich noch die Funktion einer Leuchtweiteregelung realisiert werden soll, ist es erforderlich, die Neigung der Karosserie 14 relativ zu der Fahrbahn 44 zu ermitteln und zu berücksichtigen. Dies wird anhand der Figur 6 erläutert.

Figur 6 zeigt das Kraftfahrzeug 13 auf einer horizontal verlaufenden, ebenen Fahrbahn 44. Trotz unterschiedlicher Einfederung des Kraftfahrzeugs 13 soll die Leuchtweite des Scheinwerfers 1 möglichst konstant gehalten werden. So kann es bspw. durch eine schwere Beladung des Kraftfahrzeugs 13 zu einer zusätzlichen Fahrzeugneigung δ kommen. Der so entstehende Nickwinkel δ des Fahrzeugs 13 kann 2° und mehr betragen. Über die Sensoreinrichtung 38 kann der durch die unterschiedliche Einfederung entstehende Nickwinkel δ des Kraftfahrzeugs 13 ermittelt werden. Zur Ermittlung eines Ansteuersignals für den Aktor 9, das sowohl die Grundeinstellung also auch die Leuchtweiteregelung umfasst, muss der Nickwinkel δ in die oben genannte Formel (A) mit einbezogen werden.

Im Steuergerät wird das entsprechende Ansteuersignal für den Aktor 9 generiert, der das Lichtmodul 6 abhängig von dem Ansteuersignal solange in vertikaler Richtung bewegt, bis der Einstellwinkel β für das Lichtmodul 6 folgender Formel entspricht (Soll-Vorgabe):

$$\beta = \alpha - \chi - \delta \qquad (B)$$

Figur 7 zeigt ein Kraftfahrzeug 13 mit unterschiedlicher Einfederung an einer ansteigenden Fahrbahn 44. Es gelten hierbei die gleichen Gesetzmäßigkeiten wie bei einer Einfederung des Fahrzeugs 13 auf einer horizontal verlaufenden Fahrbahn 44.

Folgende Werte seien beispielhaft angenommen:

$\alpha$ = 112° ermittelt über Neigungssensor 34
$\chi$ = 0,57° fixe Größe (nach gesetzlichen Anforderungen)
$\delta$ = 2° ermittelt über Neigungssensor 38

Im Steuergerät wird ein Ansteuersignal für den Aktor 9 generiert, der das Lichtmodul 6 zur Erreichung der Soll-Vorgabe solange vertikal bewegt, bis sich für den Einstellwinkel β für das Lichtmodul 6 ergibt:

$$\beta = 112° - 0,57° - 2° = 109,43°$$

Dabei wird nicht nur die Grundeinstellung des Lichtmoduls 6, sondern auch eine Leuchtweiteregelung realisiert. Die Ansteuerung des Aktors 9 kann mittels einer Steuerung erfolgen, wobei dann der Soll-Wert 109,43° in eine entsprechende Ansteuerung, bspw. eine bestimmte Anzahl von Schritten für einen als Schrittmotor ausgebildeten Aktor 9, umgerechnet werden muss. Die Ansteuerung kann auch im Rahmen einer Regelung erfolgen, wobei dann die aktuelle Lage des Lichtmoduls (Ist-Wert) durch den Neigungssensor 22 ermittelt werden kann. Die Regeldifferenz ergibt sich aus der Differenz zwischen Soll-Wert und Ist-Wert. Dadurch wird das Lichtmodul 6 in vertikaler Richtung gemäß der gesetzlichen Vorgaben grundeingestellt.

An Hand der Figuren 8 bis 10 wird das Verfahren zur automatischen horizontalen Grundeinstellung näher erläutert. Figur 8 zeigt das Kraftfahrzeug 13 während einer Geradeausfahrt in einer Draufsicht. Der Pfeil 54 deutet eine durch den Drehratensensor 36 ermittelte Gierrate des Kraftfahrzeugs 13 an (bei Geradeausfahrt ist die Gierrate gleich Null). Daraus kann durch eine entsprechende Auswertung im Steuergerät 12 auf eine Fahrrichtung (einen Kurs) des Kraftfahrzeugs 13 und damit auf eine horizontale Ausrichtung der Karosserie 14 geschlossen werden. Die Fahrrichtung ist durch einen Pfeil 52 angedeutet.

Die Pfeile 56 deuten eine durch den Drehratensensor 26 ermittelte Gierrate der Lichtmodule 6 an. Als Referenz zur Abstrahlrichtung des Lichtmoduls 6 ist in den Figuren 8 bis 10 ersatzweise die optische Achse 30 des Lichtmoduls 6 dargestellt. Die Ermittlung der jeweiligen Gierraten 54, 56 wird vorzugsweise bei fahrendem Kraftfahrzeug 13 durchgeführt werden.

Aus der Fahrrichtung 52 des Kraftfahrzeugs 13 und der Abstrahlrichtung 30 des Lichtmoduls 6 (Ist-Werte) kann im Steuergerät 12 eine horizontale Winkel-Abweichung der beiden Richtungen ermittelt werden. Eine gewisse horizontale Winkel-Abweichung dieser Richtungen 52, 30 ist für die Grundeinstellung gesetzlich vorgeschrieben, wobei der im Wesentliche vertikale oder in einem 15°-Winkel ansteigende Zwischenabschnitt der Helldunkelgrenze so eingestellt werden muss, dass entgegenkommende Fahrzeuge nicht geblendet werden können (Soll-Wert).

Durch einen Vergleich der Ist-Werte mit den Soll-Werten kann im Steuergerät 12 ein Ansteuerungssignal für den Aktor 10 generiert werden, der das Lichtmodul 6 um die vertikale Drehachse 8 automatisch in die vorgegebene horizontale Soll-Grundstellung bewegt, die den gesetzlichen Vorgaben entspricht. Das Lichtmodul 6 wird also in horizontaler Richtung in eine vorgegebene Relativposition bezüglich der Fahrzeugkarosserie 14 gebracht und ist damit in horizontaler Richtung den gesetzlichen Vorgaben entsprechend grundeingestellt.

Figur 9 zeigt das Kraftfahrzeug 13 während einer Kurvenfahrt in einer Draufsicht. Die ermittelte Fahrtrichtung 52 des Kraftfahrzeugs 13 und die Ausrichtung der optischen Achse 30 des Lichtmoduls 6 kann auch während einer Kurvenfahrt verglichen werden. Anhand der ermittelten Abweichung des IstWerts von dem vorgegebenen Soll-Wert wird im Steuergerät 12 ebenfalls ein Ansteuerungssignal für den Aktor 10 generiert, der das Lichtmodul 6 in horizontaler Richtung, also um die vertikale Drehachse 8, bewegt. Bei der Ermittlung der Gierraten 54, 56 für die Grundeinstellung kann die Funktion des dynamischen Kurvenlichts temporär ausgeschaltet werden, um die Ermittlung durch Nebeneffekte nicht zu behindern. Es ist aber auch denkbar, gleichzeitig mit der horizontalen Grundeinstellung die Kurvenlichtfunktionalität zu realisieren. Dabei muss dann das Signal eines Lenkwinkelsensors in der Berechnung des Ansteuersignals für den Aktor 10 mit berücksichtigt werden. Dieses Signal bzw. die gemessenen Lenkwinkel-Größen sind vorzugsweise auf dem Datenbus des Fahrzeugs 13 verfügbar und können von dem Steuergerät 12 eingelesen werden.

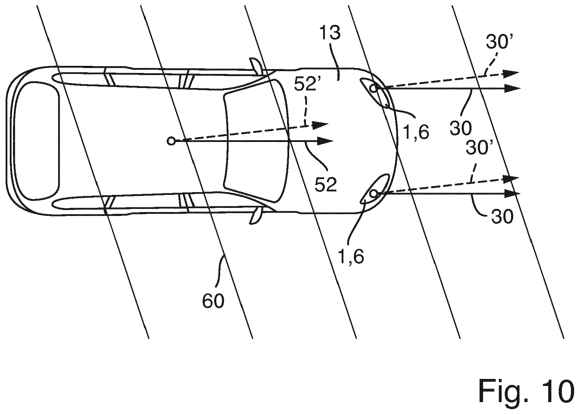

In einer alternativen Ausführungsform können die oben genannten Drehratensensoren 26, 36 zur Ermittlung der Gierrate des Lichtmoduls 6 bzw. des Kraftfahrzeugs 13 auch jeweils durch einen Erdmagnetfeldsensor oder einen digitalen oder elektronischen Kompass ersetzt werden (nicht dargestellt). Der Erdmagnetfeldsensor oder Kompass ermittelt dabei direkt die Fahrrichtung (den Kurs) des Kraftfahrzeugs 13 bzw. die Abstrahlrichtung des Lichtmoduls 6. Ein Erdmagnetfeld 60 zur Auswertung in dem Erdmagnetfeldsensor ist in Figur 10 schematisch dargestellt. Dort ist auch die Fahrtrichtung (der Kurs) des Kraftfahrzeugs 13 bei einer Geradeausfahrt mit dem Bezugszeichen 52 bezeichnet, die Fahrtrichtung bei einer Kurvenfahrt ist mit dem Bezugszeichen 52' bezeichnet. Die optische Achse des Lichtmoduls 6 ist bei einer Geradeausfahrt mit dem Bezugszeichen 30 bezeichnet, die optische Achse bei einer Kurvenfahrt ist mit dem Bezugszeichen 30' bezeichnet. Die horizontale Grundeinstellung wird durch den Vergleich der Fahrrichtung 52, 52' mit der Abstrahlrichtung 30, 30' der Lichtmodule 6 gemäß des oben genannten Verfahrens durchgeführt.

Im einfachsten Fall genügen für die Grundeinstellung die erste Sensoreinrichtung 22 zur Ermittlung der Lage des Lichtmoduls 6 sowie die zweite Sensoreinrichtung 34 zur Ermittlung der Lage der Karosserie 14. Zur Grundeinstellung wird einfach das Lichtmodul 6 in eine bestimmte vorgegebene Lage (z.B. -0,57° bzgl. einer Horizontalen) relativ zu der Karosserie 14 eingestellt. Diese Grundeinstellung wird auch bei Bewegung der Karosserie 14 um eine Querachse (Nickbewegung) konstant gehalten. In diesem Fall würde lediglich eine Leuchtweiteregelung ausgehend von der Grundeinstellung die Lage des Lichtmoduls 6 korrigieren, damit ein Blenden anderer Verkehrsteilnehmer verhindert wird. Ebenso würde die Grundeinstellung auch bei Fahrt auf ansteigender oder abfallender Fahrbahn 44 konstant gehalten.

Um die Grundeinstellung beim Befahren einer ansteigenden oder abfallenden Fahrbahn 44 zu ermöglichen, genügen ebenfalls die Sensoreinrichtungen 22, 34. Zur Grundeinstellung wird einfach das Lichtmodul 6 in eine bestimmte vorgegebene Lage relativ zu der Karosserie 14 eingestellt. Entsprechendes gilt auch bei Nickbewegung der Karosserie. Auch hier wird zur Grundeinstellung einfach das Lichtmodul 6 in eine bestimmte vorgegebene Lage relativ zu der Karosserie 14 eingestellt. Dies gilt selbstverständlich auch für den Fall, dass das Fahrzeug 13 eine ansteigende oder abfallende Fahrbahn 44 befährt und gleichzeitig noch eine Nickbewegung (bspw. aufgrund von starkem Beschleunigen oder abruptem Abbremsen) ausführt.

Erst wenn mit Hilfe der Erfindung zusätzlich noch ein Anheben oder Absenken der Leuchtweite, bspw. infolge einer Nickbewegung der Karosserie 14, während des bestimmungsgemäßen Betriebs des Scheinwerfers 1 kompensiert werden soll, ist die zusätzliche dritte Sensoreinrichtung 38 bspw. in Form des Achssensors, erforderlich. Erst durch diese Sensoreinrichtung 38 kann die Neigung der Karosserie 14 bzgl. der Fahrbahn 44 ermittelt werden. Diese Größe ist jedoch wichtig, um zu wissen, wie weit das Lichtmodul 6 abgesenkt werden muss, um eine Blendung anderer Verkehrsteilnehmer zu verhindern, und/oder angehoben werden muss, um trotz Einnicken im vorderen Bereich des Fahrzeugs 13 eine gute Ausleuchtung der Fahrbahn 44 vor dem Fahrzeug 13 zu gewährleisten. Die Verstellung des Lichtmoduls 6 im Rahmen der Leuchtweiteregulierung erfolgt jedoch ausgehend von der zuvor automatisch eingestellten Grundeinstellung, die trotz Nickbewegung der Fahrzeugkarosserie 14 konstant bleibt.

**Patentansprüche**

1. Scheinwerferanordnung eines Kraftfahrzeugs (13), umfassend mindestens einen Scheinwerfer (1) zum Aussenden einer variablen Lichtverteilung, der mindestens eine Scheinwerfer (1) umfassend ein Scheinwerfergehäuse (2), ein in dem Scheinwerfergehäuse (2) beweglich gelagertes Lichtmodul (6), mindestens einen Aktor (9, 10) zum Bewegen des Lichtmoduls (6) relativ zu dem Scheinwerfergehäuse (2) und ein elektronisches Steuergerät (12) zur Steuerung oder Regelung der Bewegung des Lichtmoduls (6) zumindest während des bestimmungsgemäßen Betriebs des Scheinwerfers (1), wobei die Scheinwerferanordnung

   - eine erste Sensoreinheit (22, 26) aufweist, die ausgebildet ist, eine aktuelle Lage des Lichtmoduls (6) im Raum in Absolutwerten zu erfassen und entsprechende Sensorsignale zu erzeugen, und
   - eine zweite Sensoreinheit (34, 36) aufweist, die ausgebildet ist, eine aktuelle Lage einer Karosserie (14) des Kraftfahrzeugs (13) im Raum in Absolutwerten zu erfassen und entsprechende Sensorsignale zu erzeugen, - wobei das Steuergerät (12) ausgebildet ist, anhand der von der ersten Sensoreinheit (22, 26) und der zweiten Sensoreinheit (34, 36) erzeugten Sensorsignale ein Ansteuerungssignal für den mindestens einen Aktor (9, 10) zu generieren, um das mindestens eine Lichtmodul (6) automatisch in eine vorgegebene Grundstellung für die variable Lichtverteilung zu bringen,

**dadurch gekennzeichnet, dass** die Scheinwerferanordnung eine dritte Sensoreinrichtung aufweist, die mehrere Achssensoren (38) des Kraftfahrzeugs (13), welche einen Weg oder Winkel einer Einfederung einer Achse des Kraftfahrzeugs relativ zu der Fahrzeugkarosserie erfasst, umfasst, und die für eine automatische Leuchtweiteregelung eine Neigung der Karosserie (14) des Kraftfahrzeugs (13) relativ zu einer Fahrbahn (44), auf der das Kraftfahrzeug (13) fährt, erfasst und ausgebildet ist, ein entsprechendes Sensorsignal zu erzeugen, und das Steuergerät (12) ausgebildet ist, das Ansteuerungssignal zur Grundeinstellung für den mindestens einen Aktor (9, 10) unter Mitberücksichtigung des von der dritten Sensoreinrichtung (38) erzeugten Sensorsignals zu generieren.

2. Scheinwerferanordnung nach Anspruch 1, **dadurch gekennzeichnet, dass** die erste Sensoreinheit (22, 26) an dem bewegbaren Lichtmodul (6) befestigt ist.

3. Scheinwerferanordnung nach Anspruch 1 oder 2, **dadurch gekennzeichnet, dass** die zweite Sensoreinheit (34, 36) an dem Scheinwerfergehäuse (2) befestigt ist.

4. Scheinwerferanordnung nach einem der vorhergehenden Ansprüche, **dadurch gekennzeichnet, dass** die erste Sensoreinheit (22, 26) einen Neigungssensor (22) umfasst, der eine Neigung des Lichtmoduls (6) zumindest in vertikaler Richtung erfasst.

5. Scheinwerferanordnung nach einem der vorhergehenden Ansprüche, **dadurch gekennzeichnet, dass** die zweite Sensoreinheit (34, 36) einen Neigungssensor (34) umfasst, der eine Neigung der Kraftfahrzeugkarosserie (14) zumindest um eine Querachse des Kraftfahrzeugs (13) erfasst.

6. Scheinwerferanordnung nach einem der vorhergehenden Ansprüche, **dadurch gekennzeichnet, dass** die erste Sensoreinheit (22, 26) einen Sensor (26) zum Erfassen einer horizontalen Ausrichtung des Lichtmoduls (6) im Raum, der ausgebildet ist, ein entsprechendes Sensorsignal zu erzeugen, und die zweite Sensoreinheit (34, 36) einen Sensor (36) zum Erfassen einer horizontalen Ausrichtung der Karosserie (14) des Kraftfahrzeugs (13) im Raum aufweist, der ausgebildet ist, ein entsprechendes Sensorsignal zu erzeugen, und das Steuergerät (12) ausgebildet ist, das Ansteuerungssignal für den mindestens einen Aktor (9, 10) unter Mitberücksichtigung der von diesen zusätzlichen Sensoren (26, 36) erzeugten Sensorsignale zu generieren.

7. Scheinwerferanordnung nach Anspruch 6, **dadurch gekennzeichnet, dass** der Sensor (26) zum Erfassen einer horizontalen Ausrichtung des Lichtmoduls (6) einen Magnetfeldsensor zum Erfassen einer Bewegungsrichtung des Lichtmoduls (6) oder einen Gierraten- oder Drehratensensor zum Erfassen einer Gierrate des Lichtmoduls (6) umfasst.

8. Scheinwerferanordnung nach Anspruch 6, **dadurch gekennzeichnet, dass** der Sensor (36) zum Erfassen einer horizontalen Ausrichtung der Karosserie (14) einen Magnetfeldsensor zum Erfassen einer Bewegungsrichtung der Fahrzeugkarosserie (14) oder einen Gierraten- oder Drehratensensor zum Erfassen einer Gierrate der Fahrzeugkarosserie (14) umfasst.

9. Scheinwerferanordnung nach Anspruch 8, **dadurch gekennzeichnet, dass** es sich bei dem Magnetfeldsensor zum Erfassen der Bewegungsrichtung der Fahrzeugkarosserie (14) oder bei dem Gierraten- oder Drehratensensor zum Erfassen der Gierrate der Fahrzeugkarosserie (14) um einen in dem Kraftfahrzeug (13) sowieso bereits zu einem anderen Zweck vorhandenen Sensor eines aktiven Fahrwerkssystems oder eines Fahrdynamiksystems des Kraftfahrzeugs (13) handelt.

10. Verfahren zum automatischen Einstellen einer Grundstellung eines Lichtmoduls (6) eines Scheinwerfers (1) eines Kraftfahrzeugs (13), wobei der Scheinwerfer (1) ein Scheinwerfergehäuse (2), das in dem Scheinwerfergehäuse (2) beweglich gelagerte Lichtmodul (6) und mindestens einen Aktor (9, 10) zum Bewegen des Lichtmoduls (6) relativ zu dem Scheinwerfergehäuse (2) aufweist und wobei das Lichtmodul (6) aus der eingestellten Grundstellung heraus eine variable Lichtverteilung erzeugt, wobei

- mittels einer ersten Sensoreinheit (22, 26) eine aktuelle Lage des Lichtmoduls (6) im Raum in Absolutwerten erfasst und ein entsprechendes Sensorsignal erzeugt wird,
- mittels einer zweiten Sensoreinheit (34, 36) eine aktuelle Lage einer Karosserie (14) des Kraftfahrzeugs (13) im Raum in Absolutwerten erfasst und ein entsprechendes Sensorsignal erzeugt wird, und
- mittels eines Steuergeräts (12) anhand der von der ersten Sensoreinheit (22, 26) und der zweiten Sensoreinheit (34, 36) erzeugten Sensorsignale ein Ansteuerungssignal für den mindestens einen Aktor (9, 10) generiert wird, um das Lichtmodul (6) automatisch in eine vorgegebene Grundstellung für die variable Lichtverteilung zu bringen,

**dadurch gekennzeichnet, dass** mittels einer dritten Sensoreinrichtung, die mehrere Achssensoren des Kraftfahrzeugs (13) umfasst, welche einen Weg oder Winkel einer Einfederung einer Achse des Kraftfahrzeugs relativ zu der Fahrzeugkarosserie erfassen und dadurch eine aktuelle Neigung der Karosserie (14) des Kraftfahrzeugs (13) relativ zu einer Fahrbahn (44), auf der das Kraftfahrzeug (13) fährt, erfasst und ein entsprechendes Sensorsignal erzeugt wird, und das Ansteuerungssignal zur Grundeinstellung für den mindestens einen Aktor (9, 10) unter Mitberücksichtigung des von der dritten Sensoreinrichtung (38) erzeugten Sensorsignals generiert wird.

**11.** Verfahren nach Anspruch 10, **dadurch gekennzeichnet, dass** mittels der ersten Sensoreinheit (22, 26) eine aktuelle Lage des Lichtmoduls (6) in vertikaler Richtung erfasst und ein entsprechendes Sensorsignal erzeugt wird, dass mittels der zweiten Sensoreinheit (34, 36) eine aktuelle Lage der Karosserie (14) des Kraftfahrzeugs (13) in vertikaler Richtung erfasst und ein entsprechendes Sensorsignal erzeugt wird und dass anhand der Sensorsignale ein Ansteuerungssignal für einen ersten Aktor (10) zur Positionierung des Lichtmoduls (6) in einer Grundstellung in vertikaler Richtung generiert wird.

**12.** Verfahren nach Anspruch 11, **dadurch gekennzeichnet, dass** mittels der ersten Sensoreinheit (22, 26) eine horizontale Ausrichtung des Lichtmoduls (6) im Raum erfasst und ein entsprechendes Sensorsignal erzeugt wird, dass mittels der zweiten Sensoreinheit (34, 36) eine horizontale Ausrichtung der Fahrzeugkarosserie (14) erfasst und ein entsprechendes Sensorsignal erzeugt wird, und dass diese Sensorsignale beim Generieren des Ansteuerungssignals für den mindestens einen Aktor (9, 10) mit berücksichtigt werden.

## Claims

**1.** Headlight arrangement of a motor vehicle (13), comprising at least one headlight (1) for emitting a variable light distribution, the at least one headlight (1) comprising a headlight housing (2), a light module (6) movably mounted in the headlight housing (2), at least one actuator (9, 10) for moving the light module (6) relative to the headlamp housing (2) and an electronic control unit (12) for controlling or regulating the movement of the light module (6) at least during the intended operation of the headlamp (1), the headlamp arrangement

- having a first sensor unit (22, 26) which is designed to detect a current position of the light module (6) in space in absolute values and to generate corresponding sensor signals, and
- having a second sensor unit (34, 36) which is designed to detect a current position of a body (14) of the motor vehicle (13) in space in absolute values and to generate corresponding sensor signals,
- wherein the control unit (12) is designed to generate a drive signal for the at least one actuator (9, 10) on the basis of the sensor signals generated by the first sensor unit (22, 26) and the second sensor unit (34, 36), in order to automatically bring the at least one light module (6) into a predetermined basic position for the variable light distribution,

**characterized in that** the headlamp arrangement has a third sensor device which comprises a plurality of axle sensors (38) of the motor vehicle (13) which detect a path or angle of deflection of an axle of the motor vehicle relative to the vehicle body, and which, for automatic range adjustment, detects an inclination of the body (14) of the motor vehicle (13) relative to a roadway (44), on which the motor vehicle (13) travels, and which is designed to generate a corresponding sensor signal, and the control unit (12) is designed to generate the drive signal for the basic setting for the at least one actuator (9, 10) taking into account the sensor signal generated by the third sensor device (38).

**2.** Headlamp arrangement according to claim 1, **characterized in that** the first sensor unit (22, 26) is fastened to the movable light module (6).

**3.** Headlight arrangement according to claim 1 or 2, **characterized in that** the second sensor unit (34, 36) is fastened to the headlight housing (2).

4. Headlamp arrangement according to one of the preceding claims, **characterized in that** the first sensor unit (22, 26) comprises an inclination sensor (22) which detects an inclination of the light module (6) at least in the vertical direction.

5. Headlamp arrangement according to one of the preceding claims, **characterized in that** the second sensor unit (34, 36) comprises an inclination sensor (34) which detects an inclination of the motor vehicle body (14) at least about a transverse axis of the motor vehicle (13).

6. Headlamp arrangement according to one of the preceding claims, **characterized in that** the first sensor unit (22, 26) comprises a sensor (26) for detecting a horizontal orientation of the light module (6) in space adapted to generate a corresponding sensor signal, and the second sensor unit (34,36) comprises a sensor (36) for detecting a horizontal orientation of the body (14) of the motor vehicle (13) in space, which sensor is designed to generate a corresponding sensor signal, and the control unit (12) is designed to generate the drive signal for the at least one actuator (9, 10) taking into account the sensor signals generated by these additional sensors (26, 36).

7. Headlight arrangement according to claim 6, **characterized in that** the sensor (26) for detecting a horizontal orientation of the light module (6) comprises a magnetic field sensor for detecting a direction of movement of the light module (6) or a yaw rate or rotation rate sensor for detecting a yaw rate of the light module (6).

8. Headlamp arrangement according to claim 6 , **characterized in that** the sensor (36) for detecting a horizontal orientation of the body (14) comprises a magnetic field sensor for detecting a direction of movement of the vehicle body (14) or a yaw rate or rotation rate sensor for detecting a yaw rate of the vehicle body (14).

9. Headlamp arrangement according to Claim 8, **characterized in that** the magnetic field sensor for detecting the direction of movement of the vehicle body (14) or the yaw rate or rotation rate sensor for detecting the yaw rate of the vehicle body (14) is a sensor of an active chassis system or a vehicle dynamics system of the motor vehicle (13) which sensor is already present in the motor vehicle (13) anyway for another purpose.

10. Method for automatically setting a basic position of a light module (6) of a headlight (1) of a motor vehicle (13), the headlight (1) having a headlight housing (2) which has a light module (6) mounted movably in the headlight housing (2) and at least one actuator (9, 10) for moving the light module (6) relative to the headlight housing (2), and the light module (6) generating a variable light distribution from the set basic position, the headlight module (6) generating a variable light distribution from the set basic position, the headlight housing (2) having a light module (6) which is mounted movably in the headlight housing (2), and the light module (6) generating a variable light distribution from the set basic position, the light module (6) generating a variable light distribution from the light module (6) to the actuator (9, 10).

   - a current position of the light module (6) in the room is detected in absolute values by means of a first sensor unit (22, 26) and a corresponding sensor signal is generated,
   - a current position of a body (14) of the motor vehicle (13) in space is detected in absolute values by means of a second sensor unit (34, 36) and a corresponding sensor signal is generated, and
   - a control signal for the at least one actuator (9, 10) is generated by means of a control device (12) on the basis of the sensor signals generated by the first sensor unit (22, 26) and the second sensor unit (34, 36), in order to automatically bring the light module (6) into a predetermined basic position for the variable light distribution,

   **characterized in that** by means of a third sensor device comprising a plurality of axle sensors of the motor vehicle (13) which detect a path or angle of deflection of an axle of the motor vehicle relative to the vehicle body and thereby a current inclination of the body (14) of the motor vehicle (13) relative to a roadway (44), on which the motor vehicle (13) drives, and a corresponding sensor signal is generated, and the drive signal for the basic setting for the at least one actuator (9, 10) is generated taking into account the sensor signal generated by the third sensor device (38).

11. Method according to Claim 10, **characterized in that** a current position of the light module (6) in the vertical direction is detected by means of the first sensor unit (22, 26) and a corresponding sensor signal is generated, **in that** a current position of the body (14) of the motor vehicle (13) in the vertical direction is detected by means of the second sensor unit (34, 36) and a corresponding sensor signal is generated, and **in that** a drive signal for a first actuator (10) for positioning the light module (6) in a basic position in the vertical direction is generated on the basis of the sensor signals.

**12.** Method according to Claim 11, **characterized in that** a horizontal orientation of the light module (6) in space is detected by means of the first sensor unit (22, 26) and a corresponding sensor signal is generated, **in that** a horizontal orientation of the vehicle body (14) is detected by means of the second sensor unit (34, 36) and a corresponding sensor signal is generated, and **in that** these sensor signals are taken into account when generating the drive signal for the at least one actuator (9, 10).

**Revendications**

**1.** Agencement de phare d'un véhicule automobile (13), comprenant au moins un phare (1) pour émettre une répartition de lumière variable, ledit au moins un phare (1) comprenant un boîtier de phare (2), un module lumineux (6) supporté de façon mobile dans le boîtier de phare (2), au moins un actionneur (9, 10) pour déplacer le module de lumière (6) par rapport au boîtier de phare (2) et un dispositif de commande (12) électronique pour la commande ou le réglage du mouvement du module de lumière (6) au moins pendant le fonctionnement du phare (1) conforme à sa destination, l'agencement de phare comprenant

- une première unité de capteurs (22, 26) conformée pour capter une situation actuelle du module lumineux (6) dans l'espace en valeurs absolues et pour engendrer des signaux de capteur correspondants, et
- une deuxième unité de capteurs (34, 36) conformée pour capter une situation actuelle d'une carrosserie (14) du véhicule automobile (13) dans l'espace en valeurs absolues et pour engendrer des signaux de capteur correspondants,
- le dispositif de commande (12) étant conformé pour engendrer, sur la base des signaux de capteur engendrés par la première unité de capteurs (22, 26) et la deuxième unité de capteurs (34, 36), un signal d'asservissement pour ledit au moins un actionneur (9, 10), afin d'amener ledit au moins un module lumineux (6) automatiquement dans une position de base prédéterminée pour la répartition variable de lumière,

**caractérisé en ce que** l'agencement de phare comprend un troisième dispositif de capteurs qui comporte plusieurs capteurs d'axe (38) du véhicule automobile (13) qui captent un trajet ou angle d'une compression du ressort du véhicule automobile par rapport à la carrosserie de véhicule, et qui, pour un réglage automatique de la portée d'éclairage, capte une inclinaison de la carrosserie (14) du véhicule automobile (13) par rapport à une chaussée (44) sur laquelle roule le véhicule automobile (13), et qui est conformée pour engendrer un signal de capteur correspondant, et **en ce que** le dispositif de commande (12) est conformé pour engendrer le signal d'asservissement pour le réglage initial pour ledit au moins un actionneur (9, 10) en tenant également compte du signal de capteur engendré par le troisième dispositif de capteurs (38).

**2.** Agencement de phare selon la revendication 1, **caractérisé en ce que** la première unité de capteurs (22, 23) est fixée au module lumineux (6) mobile.

**3.** Agencement de phare selon la revendication 1 ou 2, **caractérisé en ce que** la deuxième unité de capteurs (34, 36) est fixée au boîtier de phare (2).

**4.** Agencement de phare selon l'une des revendications précédentes, **caractérisé en ce que** la première unité de capteurs (22, 26) comprend un capteur d'inclinaison (22) qui capte une inclinaison du module lumineux (6) au moins en direction verticale.

**5.** Agencement de phare selon l'une des revendications précédentes, **caractérisé en ce que** la deuxième unité de capteurs (34, 36) comprend un capteur d'inclinaison (34) qui capte une inclinaison de la carrosserie de véhicule automobile (14) au moins autour d'un axe transversal du véhicule automobile (13).

**6.** Agencement de phare selon l'une des revendications précédentes, **caractérisé en ce que** la première unité de capteurs (22, 26) comprend un capteur (26) pour capter une orientation horizontale du module lumineux (6) dans l'espace, qui est conformé pour engendrer un signal de capteur correspondant, et que la deuxième unité de capteurs (34, 36) comprend un capteur (36) pour capter une orientation horizontale de la carrosserie (14) du véhicule automobile (13) dans l'espace, qui est conformé pour engendrer un signal de capteur correspondant, et que le dispositif de commande (12) est conformé pour engendrer le signal d'asservissement pour ledit au moins un actionneur (9, 10) en tenant également compte des signaux de capteur engendrés par ces capteurs supplémentaires (26, 36).

**7.** Agencement de phare selon la revendication 6, **caractérisé en ce que** le capteur (26) pour capter une orientation horizontale du module lumineux (6) comprend un capteur de champ magnétique pour capter une direction de mouvement du module lumineux (6) ou un capteur de vitesse de lacet ou de vitesse de rotation pour capter une vitesse de lacet du module lumineux (6).

**8.** Agencement de phare selon la revendication 6, **caractérisé en ce que** le capteur (36) pour capter une orientation horizontale de la carrosserie (14) comprend un capteur de champ magnétique pour capter une direction de mouvement de la carrosserie de véhicule (14) ou un capteur de vitesse de lacet ou de vitesse de rotation pour capter une vitesse de lacet de la carrosserie de véhicule (14).

**9.** Agencement de phare selon la revendication 8, **caractérisé en ce qu'**il s'agit, en ce qui concerne le capteur de champ magnétique pour capter la direction de mouvement de la carrosserie de véhicule (14) ou en ce qui concerne le capteur de vitesse de lacet ou de vitesse de rotation pour capter une vitesse de lacet de la carrosserie de véhicule (14), d'un capteur d'un système actif du système de train de roulement ou d'un système de dynamique de mouvement du véhicule automobile (13) qui, de toutes façons, y est déjà dans un autre but.

**10.** Procédé pour le réglage automatique de la position de base d'un module lumineux (6) d'un phare (1) d'un véhicule automobile (13), le phare (1) comprenant un boîtier de phare (2), le module lumineux (6) supporté de façon mobile dans le boîtier de phare (2) et au moins un actionneur (9, 10) pour déplacer le module lumineux (6) par rapport au boîtier de phare (2), et le module lumineux (6) produisant, à partir de la position de base réglée, une répartition de lumière variable,

  - à l'aide d'une première unité de capteurs (22, 26), une situation actuelle du module lumineux (6) dans l'espace étant captée en valeurs absolues et un signal de capteur correspondant étant engendré,
  - à l'aide d'une deuxième unité de capteurs (34, 36), une situation actuelle d'une carrosserie (14) du véhicule automobile (13) dans l'espace étant captée en valeurs absolues et un signal de capteur correspondant étant engendré, et
  - à l'aide d'un dispositif de commande (12), un signal d'asservissement pour ledit au moins un actionneur (9, 10) étant engendré sur la base des signaux de capteur engendrés par la première unité de capteurs (22, 26) et la deuxième unité de capteurs (34, 36), afin d'amener le module lumineux (6) automatiquement dans une position de base prédéterminée pour la répartition variable de lumière,

  **caractérisé en ce que**, à l'aide d'un troisième dispositif de capteurs qui comporte plusieurs capteurs d'axe (38) du véhicule automobile (13) qui captent un trajet ou angle d'une compression du ressort du véhicule automobile par rapport à la carrosserie de véhicule, et qui, par cela, capte une inclinaison de la carrosserie (14) du véhicule automobile (13) par rapport à une chaussée (44) sur laquelle roule le véhicule automobile (13), un signal de capteur correspondant est engendré, et que le signal d'asservissement pour le réglage initial pour ledit au moins un actionneur (9, 10) est engendré en tenant également compte du signal de capteur engendré par le troisième dispositif de capteurs (38).

**11.** Procédé selon la revendication 10, **caractérisé en ce que**, à l'aide de la première unité de capteurs (22, 26), une situation actuelle du module lumineux (6) dans la direction verticale est captée et un signal de capteur correspondant est engendré, **en ce que**, à l'aide de la deuxième unité de capteurs (34, 36), une situation actuelle de la carrosserie (14) du véhicule automobile (13) dans la direction verticale est captée et un signal de capteur correspondant est engendré, et **en ce que**, sur la base des signaux de capteur, un signal d'asservissement pour un premier actionneur (10) est engendré pour positionner le module lumineux (6) dans une position de base dans la première direction.

**12.** Procédé selon la revendication 11, **caractérisé en ce que**, à l'aide de la première unité de capteurs (22, 26), une orientation horizontale du module lumineux (6) dans l'espace est captée et un signal de capteur correspondant est engendré, **en ce que**, à l'aide de la deuxième unité de capteurs (34, 36), une orientation horizontale de la carrosserie de véhicule (14) est captée et un signal de capteur correspondant est engendré, et **en ce que** ces signaux de capteur sont également pris en compte lors de la génération du signal d'asservissement pour ledit au moins un actionneur (9, 10).

Fig. 1

Fig. 2

Fig. 3

Fig. 4

Fig. 5

Fig. 6

Fig. 7

13 56 28

30

54

52

1,6

30

58

56 1,6 28

Fig. 8

13 56 28

30

54

52

1,6

30

58

56 1,6 28

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008003707 A1
- EP 1316474 A2

- DE 202011003404 U1